# FASCICULE DE BREVET EUROPEEN

(11) **EP 3 425 261 B1**
(45) Date de publication et mention de la délivrance du brevet: **21.09.2022**
(21) Numéro de dépôt: 18181482.3
(22) Date de dépôt: 03.07.2018
(51) Int. Cl.: F17C 3/02

(54) **CUVE ETANCHE ET THERMIQUEMENT ISOLANTE**
DICHTER UND WÄRMEISOLIERTER TANK
SEALED AND THERMALLY INSULATING VESSEL

(30) Priorité: 04.07.2017 FR 1756312
(43) Date de publication de la demande: 09.01.2019
(73) Titulaire: Gaztransport et Technigaz, 78470 Saint-Rémy-lès-Chevreuse (FR)
(72) Inventeur: DURAND, François, 78470 SAINT REMY LES CHEVREUSE (FR); LE ROUX, Guillaume, 78470 SAINT REMY LES CHEVREUSE (FR); BOUGAULT, Johan, 78470 SAINT REMY LES CHEVREUSE (FR); BERGER, Vincent, 78470 SAINT REMY LES CHEVREUSE (FR)
(74) Mandataire: Loyer & Abello

(56) Documents cités:
- WO-A1-2017/064413

## Description

### Domaine technique

L'invention se rapporte au domaine des cuves étanches et thermiquement isolantes. En particulier, l'invention se rapporte au domaine des cuves étanches et thermiquement isolantes dans le cadre du stockage ou du transport de liquide à basse température telles que des cuves de navires pour le transport de Gaz de Pétrole Liquéfié (aussi appelé GPL) présentant par exemple une température comprise entre -50°C et 0°C, ou pour le transport de gaz naturel liquéfié (GNL) à environ -162°C à pression atmosphérique.

### Arrière-plan technologique

Des cuves de gaz liquéfié sont connues par exemple du document FR3008765. Ce document décrit une cuve de méthanier comportant une pluralité de parois de cuve longitudinales et une pluralité de parois de cuve transversales. Chaque paroi de la cuve comporte une double membrane d'étanchéité intercalée avec une double barrière isolante.

Lors de chargements et déchargements du gaz liquéfié, le changement de température impose de fortes déformations thermiques, et donc des contraintes aux membranes étanches de la cuve. De même, lors d'un transport en mer, le mouvement du gaz liquéfié dans la cuve exerce des forces importantes sur les barrières isolantes et les membranes de la cuve. Afin d'éviter une dégradation des caractéristiques d'étanchéité de la cuve, selon le document FR3008765, les membranes étanches de la cuve sont ancrées sur la structure porteuse à l'aide de coupleurs d'ancrage dans la zone où les parois longitudinales rejoignent les parois transversales. Les membranes étanches sont liées au coupleur par l'intermédiaire de poutres composites fixées sur une face interne de caissons isolants formant les barrières thermiquement isolantes.

Le document WO2017064413 décrit une structure étanche et thermiquement isolante en particulier pour le gaz de pétrole liquéfié (GPL).Dans le document WO2017O64413, des bandes d'ancrage sont fixées sur des blocs isolants de bordure en préfabrication. Les blocs isolants de bordure et les bandes d'ancrages montés ensemble sont ensuite alignés le long de l'arête lors de la fabrication de la cuve dans la structure porteuse. Les pièces d'angle de la membrane sont soudées sur les bandes d'ancrage dans une étape ultérieure.

### Résumé

Une idée à la base de l'invention est de reprendre les efforts de tension de la membrane étanche par des coupleurs ancrés sur la structure porteuse sans exercer de contraintes de cisaillement importantes sur les éléments formant la barrière thermiquement isolante.

Selon un mode de réalisation, l'invention fournit une cuve étanche et thermiquement isolante intégrée dans une structure porteuse polyédrique, une première paroi porteuse de la structure porteuse et une deuxième paroi porteuse de la structure porteuse formant une arête de la structure porteuse, la cuve comportant une première paroi de cuve ancrée sur la première paroi porteuse et une deuxième paroi de cuve ancrée sur la deuxième paroi porteuse, les parois de cuve comportant une barrière thermiquement isolante ancrée sur la paroi porteuse correspondante et une membrane étanche portée par ladite barrière thermiquement isolante,

Selon des modes de réalisation, une telle cuve peut comporter une ou plusieurs des caractéristiques suivantes.

Selon un mode de réalisation, la cuve comporte en outre une cornière, la cornière comportant une première aile portée par la barrière thermiquement isolante de la première paroi de cuve et une deuxième aile portée par la barrière thermiquement isolante de la deuxième paroi de cuve, une portion d'extrémité de la membrane étanche de la première paroi de cuve tournée vers l'arête étant fixée de manière étanche à la première aile de la cornière et une portion d'extrémité de la membrane étanche de la deuxième paroi de cuve tournée vers l'arête étant fixée de manière étanche à la deuxième aile de la cornière de sorte que la cornière relie de manière étanche la membrane étanche de la première paroi de cuve et la membrane étanche de la deuxième paroi de cuve au droit de l'arête,
la cornière comportant une paire de premières pattes faisant chacune saillie d'une portion d'extrémité respective de la première aile en direction de la première paroi porteuse et une paire de deuxièmes pattes faisant chacune saillie d'une portion d'extrémité respective de la deuxième aile en direction de la deuxième paroi porteuse,
la cuve comportant en outre une paire de premières tiges d'ancrages comportant chacune une première extrémité et une deuxième extrémité opposée à la première extrémité, ladite première extrémité étant ancrée à la deuxième paroi porteuse et ladite deuxième extrémité étant accouplée à une première patte respective de la paire de premières pattes, une, plusieurs ou chaque dite première tige d'ancrage se développant depuis la deuxième paroi porteuse en direction de la première patte correspondante pour transmettre un effort de traction entre la cornière et la deuxième paroi porteuse et retenir la cornière sur la barrière thermiquement isolante,
la cuve comportant en outre une paire de deuxièmes tiges d'ancrage comportant chacune une première extrémité et une deuxième extrémité opposée à la première extrémité, ladite première extrémité étant ancrée sur la première paroi porteuse et ladite deuxième extrémité étant accouplée à une deuxième patte respective de la paire de deuxièmes pattes, une, plusieurs ou chaque dite deuxième tige d'ancrage se développant depuis la première paroi porteuse en direction de la deuxième patte correspondante pour transmettre un effort de traction entre la cornière et la première paroi porteuse et retenir la cornière sur la barrière thermiquement isolante.

Grâce à ces caractéristiques, une même cornière relie de manière étanche les membranes étanches de deux parois de cuve tout en étant accouplée à chacune des parois porteuses portant lesdites parois de cuve. Une telle cornière d'angle directement accouplée aux parois porteuses évite ainsi que les contraintes de la membrane étanche ne transitent par les blocs de bordure sur lesquels elle repose. En outre, une telle cornière étant directement accouplée aux deux parois porteuses formant l'arête de la paroi porteuse peut être correctement maintenue en position dans la cuve au regard de chacune desdites paroi porteuses, cette cornière ne nécessitant donc pas d'être fixée sur les blocs de bordure autrement que par les tiges d'ancrage et pouvant simplement reposer sur lesdits blocs de bordure. Une telle cornière reposant simplement sur les blocs de bordure sous l'effet des tiges d'ancrage permet de limiter la préfabrication en atelier en ne nécessitant pas d'autre étape de fixation, par exemple par rivetage, des cornières sur les blocs de bordure.

Grâce à ces caractéristiques, la cornière présente une bonne rigidité facilitant sa mise en place sur les blocs de bordure. En outre, une telle rigidité permet d'augmenter les niveaux de sollicitations mécaniques transitant par les cornières.

Selon un mode de réalisation, une dite ou chaque première patte fait saillie depuis une face inférieure de la première aile en regard de la première paroi porteuse à distance d'un bord latéral de la première aile de la cornière formant une extrémité de la première aile, et une dite ou chaque deuxième patte fait saillie depuis une face inférieure de la deuxième aile en regard de la deuxième paroi porteuse à distance d'un bord latéral de la deuxième aile de la cornière formant une extrémité de la deuxième aile.

Grâce à ces caractéristiques, le bord latéral de la première aile peut se développer au-delà de la patte et donc se rapprocher d'un élément adjacent, par exemple le bord en vis-à-vis d'une cornière adjacente. Ainsi, l'espace séparant deux cornières adjacentes peut être limité facilitant la réalisation de la liaison étanche le long de l'arête 1 entre lesdites cornières adjacentes tout en ménageant un espace suffisant pour faire passer une tige d'ancrage dans cette zone.

Selon un mode de réalisation, un bord longitudinal de la première aile parallèle à l'arête fait saillie au-delà des premières pattes selon une direction perpendiculaire à la deuxième paroi porteuse de sorte que ledit bord longitudinal de la première aile soit plus éloigné de la deuxième paroi porteuse que lesdites premières pattes selon ladite direction perpendiculaire à la deuxième paroi porteuse, et/ou un bord longitudinal de la deuxième aile parallèle à l'arête fait saillie au-delà des deuxièmes pattes selon une direction perpendiculaire à la première paroi porteuse de sorte que ledit bord longitudinal de la deuxième aile soit plus éloigné de la première paroi porteuse que lesdites deuxièmes pattes selon ladite direction perpendiculaire à la première paroi porteuse.

Grâce à ces caractéristiques, la surface disponible sur l'aile de la cornière pour souder la membrane étanche peut être agrandie et la gestion des tolérances de montage peut être facilitée.

Selon un mode de réalisation, la barrière thermiquement isolante de la première paroi de cuve forme une première surface de support sur laquelle repose la membrane étanche de la première paroi de cuve, et la barrière thermiquement isolante de la première paroi de cuve forme un premier lamage agencé à une extrémité de la première surface de support tournée vers l'arête, la première aile de la cornière étant logée dans ledit premier lamage de sorte qu'une face supérieure de la première aile de la cornière affleure avec la première surface de support ; et la barrière thermiquement isolante de la deuxième paroi de cuve forme un deuxième lamage agencé à une extrémité de la deuxième surface de support tournée vers l'arête, la deuxième aile de la cornière étant logée dans ledit deuxième lamage de sorte qu'une face supérieure de la deuxième aile de la cornière affleure avec la deuxième surface de support.

Grâce à ces caractéristiques, la cornière et les barrières thermiquement isolantes des parois de cuve forment conjointement des surfaces sensiblement planes et uniformes pour recevoir les membranes étanches desdites parois de cuve.

Une telle cornière peut être réalisée de différentes longueurs. Selon un mode de réalisation, la cuve comporte une rangée de cornières juxtaposées et reliées de manière étanche deux à deux le long de l'arête,

Selon un mode de réalisation, plusieurs des, certaines des ou toutes les cornières de la rangée de cornières comportent une première aile portée par la barrière thermiquement isolante de la première paroi de cuve et une deuxième aile portée par la barrière thermiquement isolante de la deuxième paroi de cuve, une portion d'extrémité de la membrane étanche de la première paroi de cuve tournée vers l'arête étant fixée de manière étanche à la première aile desdites cornières et une portion d'extrémité de la membrane étanche de la deuxième paroi de cuve tournée vers l'arête étant fixée de manière étanche à ladite deuxième aile desdites cornières de sorte que lesdites, plusieurs des, certaines des ou toutes les cornières de la rangée relient de manière étanche la membrane étanche de la première paroi de cuve et la membrane étanche de la deuxième paroi de cuve au droit de l'arête,
une, plusieurs ou chaque dite cornière comportant en outre une paire de premières pattes faisant chacune saillie d'une portion d'extrémité respective de la première aile de ladite cornière en direction de la première paroi porteuse et une paire de deuxièmes pattes faisant chacune saillie d'une portion extrémité respective de la deuxième aile de ladite cornière en direction de la deuxième paroi porteuse,
la cuve comportant une rangée de premières tiges d'ancrage comportant chacune une première extrémité et une deuxième extrémité opposée à la première extrémité, une pluralité de premières tiges d'ancrage de la rangée de premières tiges d'ancrage présentant une dite première extrémité ancrée à la deuxième paroi porteuse et une dite deuxième extrémité accouplée à au moins une première patte d'au moins une cornière de la rangée de cornières, lesdites premières tiges d'ancrage se développant depuis la deuxième paroi porteuse en direction de ladite au moins une première patte pour transmettre un effort de traction entre ladite au moins une cornière et la deuxième paroi porteuse et retenir ladite au moins une cornière sur la barrière thermiquement isolante,
la cuve comportant en outre une rangée de deuxièmes tiges d'ancrage comportant chacune une première extrémité et une deuxième extrémité opposée à la première extrémité, une pluralité de deuxièmes tiges d'ancrage de la rangée de deuxièmes tiges d'ancrage présentant une dite première extrémité ancrée sur la première paroi porteuse et une dite deuxième extrémité étant accouplée à au moins une deuxième patte d'au moins une cornière de la rangée de cornières, lesdites deuxièmes tiges d'ancrage se développant depuis la première paroi porteuse en direction de ladite au moins une deuxième patte pour transmettre un effort de traction entre ladite au moins une cornière et la première paroi porteuse et retenir ladite au moins une cornière sur la barrière thermiquement isolante.

Selon un mode de réalisation, la deuxième extrémité d'une dite tige d'ancrage est accouplée conjointement à deux pattes d'ancrage appartenant à deux cornières adjacentes dans ladite rangée de cornière pour retenir lesdites deux cornières adjacentes sur la barrière thermiquement isolante. Une telle disposition peut être employée pour une, plusieurs ou toutes les premières tiges d'ancrage et/ou pour une, plusieurs ou toutes les deuxièmes tiges d'ancrage. Cette disposition permet d'employer la tige d'ancrage conjointement pour l'ancrage de deux cornières, ce qui limite le nombre de tiges d'ancrage à installer et l'encombrement correspondant.

Selon un mode de réalisation, la barrière thermiquement isolante de la première paroi de cuve comporte une rangée de premiers blocs de bordure ancrés sur la première paroi porteuse et juxtaposés le long de l'arête, au moins deux desdits premiers blocs de bordure comportant chacun une rainure ménagée dans l'épaisseur du premier bloc de bordure depuis une face supérieure du premier bloc de bordure de manière à former un espace accessible depuis la deuxième paroi porteuse dans le premier bloc de bordure, les tiges d'ancrage de ladite paire de premières tiges d'ancrage étant logées dans les rainures des deux premiers blocs de bordure, la première aile de la cornière étant disposée à chevauchement sur lesdits deux premiers blocs de bordure de sorte que les premières pattes de ladite cornière sont saillantes dans lesdites rainures des deux blocs de bordure.

Un tel bloc isolant peut être réalisé de différentes façons et avec différents matériaux, notamment sous la forme de blocs de mousse isolante, par exemple mousse de polyuréthane, ou sous la forme de caissons remplis d'une garniture isolante. Selon un mode de réalisation correspondant, au moins un des premiers blocs de bordure comporte :
un panneau de fond globalement rectangulaire,
un panneau de couvercle globalement rectangulaire disposé parallèlement au panneau de fond à l'aplomb du panneau de fond,
des éléments d'entretoise, disposés entre le panneau de fond et le panneau de couvercle et s'étendant dans une direction d'épaisseur du bloc de bordure entre le panneau de fond et le panneau de couvercle de manière à maintenir le panneau de couvercle à distance du panneau de fond,
une garniture calorifuge disposée entre le panneau de fond et le panneau de couvercle et entre les éléments d'entretoise, de manière à remplir un espace interne du bloc de bordure,
dans lequel le panneau de couvercle présente au moins une découpe débouchant sur un bord transversal du panneau de couvercle en vis-à-vis de la deuxième paroi porteuse à une position située entre deux bords longitudinaux du panneau de couvercle, un côté transversal du bloc de bordure en vis-à-vis de la deuxième paroi porteuse comportant au moins une ouverture située au droit de ladite au moins une découpe,
les éléments d'entretoise et la garniture calorifuge étant disposés de manière à ménager un espace libre sous ladite au moins une découpe du panneau de couvercle et au droit de ladite au moins une ouverture du côté transversal du bloc de bordure, ledit espace libre formant la rainure ménagée dans l'épaisseur dudit bloc de bordure. Selon un mode de réalisation, la ou chaque rainure du bloc de bordure peut être réalisée à l'aide de cette structure comportant une découpe dans le panneau de couvercle et une ouverture sur le côté du bloc de bordure. La garniture calorifuge peut être réalisée en différents matériaux, par exemple en laine de verre ou de roche, perlite, mousse polymère ou autre.

Selon un mode de réalisation, la barrière thermiquement isolante de la deuxième paroi de cuve comporte une rangée de deuxièmes blocs de bordure ancrés sur la deuxième paroi porteuse et juxtaposés le long de l'arête, au moins deux desdits deuxièmes blocs de bordure comportant chacun une rainure ménagée dans l'épaisseur du deuxième bloc de bordure depuis une face supérieure du deuxième bloc de bordure de manière à former un espace accessible depuis la première paroi porteuse dans le deuxième bloc de bordure, les tiges d'ancrage de ladite paire de deuxièmes tiges d'ancrage étant logées dans les rainures des deux deuxièmes blocs de bordure, la deuxième aile d'une cornière étant disposée à chevauchement sur les deux deuxièmes blocs de bordure de sorte que les deuxièmes pattes de ladite cornière sont saillantes dans lesdites rainures des deux deuxièmes blocs de bordure.

Grâce à ces caractéristiques, les tiges d'ancrages ne sont pas logées entre les blocs de bordure. Ainsi, l'écartement entre deux blocs de bordure adjacents peut être limité.

Grâce à ces caractéristiques, l'étanchéité de la membrane étanche est assurée au niveau d'un coin de la cuve.

La cornière peut être réalisée de différentes manières, de préférence en matière métallique. Selon un mode de réalisation, les ailes et les pattes de la cornière sont formées d'un seul tenant de sorte que la cornière est monobloc. Selon un mode de réalisation, une cornière est constituée de deux bandes d'ancrage disposées respectivement de part et d'autre de l'arête et d'une ou plusieurs pièces d'angle rapportées sur les bandes d'ancrage pour les raccorder de manière étanche au droit de l'arête. D'autres modes de réalisation employant des bandes d'ancrage sont décrits ci-dessous.

Selon un mode de réalisation, la barrière thermiquement isolante d'une première paroi de cuve comportant une rangée de blocs de bordure ancrés sur la première paroi porteuse et juxtaposés le long de l'arête de manière à former une surface de support parallèle à la première paroi porteuse,
la cuve comportant une rangée de bandes d'ancrage se développant parallèlement à l'arête, lesdites bandes d'ancrage étant portées par la première surface de support et ancrées à la deuxième paroi porteuse par une rangée de tiges d'ancrage, une, plusieurs ou chaque dite tige d'ancrage comportant une première extrémité ancrée à la deuxième paroi porteuse et une deuxième extrémité accouplée à la rangée de bandes d'ancrage pour transmettre un effort de traction entre la rangée de bandes d'ancrage et la deuxième paroi porteuse, une portion d'extrémité de la membrane étanche de la première paroi de cuve tournée vers l'arête étant fixée de manière étanche sur ladite rangée de bandes d'ancrage,
un premier et un deuxième desdits blocs de bordure comportant chacun une rainure ménagée dans l'épaisseur dudit bloc de bordure depuis une face supérieure dudit bloc de bordure de manière à former un espace accessible depuis la deuxième paroi porteuse dans le bloc de bordure, une première et une deuxième desdites tiges d'ancrage étant logées respectivement dans la rainure du premier et du deuxième bloc de bordure,
une bande d'ancrage de la rangée de bande d'ancrage est portée à chevauchement sur le premier bloc de bordure et le deuxième bloc de bordure, ladite bande d'ancrage comportant une première et une deuxième pattes faisant saillie respectivement depuis deux portions d'extrémité opposées de la bande d'ancrage en direction de la première paroi porteuse, les première et une deuxième pattes étant engagées respectivement dans la rainure du premier bloc de bordure et du deuxième bloc de bordure et étant respectivement accouplées à la première tige d'ancrage et à la deuxième tige d'ancrage.

Une telle cuve dans laquelle les pattes de la bande d'ancrage sont logées dans les rainures des blocs de bordure ne nécessite pas d'adapter l'espacement entre lesdits blocs de bordure pour y loger lesdites tiges d'ancrage. Ainsi, il est possible de réduire l'espacement entre lesdits blocs de bordure. La réduction de l'espace entre deux blocs de bordure adjacents peut conduire à une réduction de l'isolation à placer entre lesdits blocs de bordure et donc une simplification de l'application industrielle et une limitation du risque industriel dans la pose.

En outre, l'agencement des tiges d'ancrage dans les rainures peut offrir une plus grande liberté de positionnement des coupleurs permettant d'ancrer les blocs de bordure sur les parois porteuses.

Dans des modes de réalisation, plusieurs des ou tous les blocs de bordure peuvent comporter une rainure ménagée dans l'épaisseur dudit bloc de bordure depuis une face supérieure dudit bloc de bordure de manière à former un espace accessible depuis la deuxième paroi porteuse dans le bloc de bordure, de sorte que toutes lesdites tiges d'ancrage ou une majorité de celles-ci soient logées dans lesdites rainures.

Selon un mode de réalisation, lesdits premiers et deuxièmes blocs de bordures présentent une longueur égale prise selon une direction parallèle à l'arête, et la bande d'ancrage portée à chevauchement sur le premier bloc de bordure et le deuxième bloc de bordure présente une longueur prise selon la direction parallèle à l'arête inférieure à ladite longueur des blocs de bordure.

Selon un mode de réalisation, la rainure du premier bloc de bordure constitue une première rainure, le premier bloc de bordure comportant en outre une deuxième rainure ménagée dans l'épaisseur dudit premier bloc de bordure depuis la face supérieure dudit bloc de bordure et espacée de la première rainure le long de l'arête de manière à former un deuxième espace accessible depuis la deuxième paroi porteuse, une troisième des tiges d'ancrage étant logée dans la deuxième rainure dudit bloc de bordure,
une bande d'ancrage de la rangée de bande d'ancrage est disposée seulement sur le premier bloc de bordure, ladite bande d'ancrage comportant une première et une deuxième pattes faisant saillie respectivement depuis deux portions d'extrémité opposées de la bande d'ancrage en direction de la première paroi porteuse, les première et une deuxième pattes étant engagées respectivement dans la première et la deuxième rainures du premier bloc de bordure et étant respectivement accouplées à la première tige d'ancrage et à la troisième tige d'ancrage.

Dans des modes de réalisation, plusieurs des ou tous les blocs de bordure peuvent comporter deux rainures mutuellement espacées le long de l'arête, une, plusieurs ou chaque dite rainure accueillant une desdites tiges d'ancrage.

Dans des modes de réalisation, la rangée de bandes d'ancrage et/ou de cornières peut comporter uniquement des bandes d'ancrage et/ou des cornières disposées à chevauchement sur plusieurs blocs de bordure ou une combinaison de bandes d'ancrage et/ou de cornières disposées à chevauchement sur plusieurs blocs de bordure et de bandes d'ancrage et/ou de cornières disposées seulement sur un bloc de bordure. Ces deux dispositions des bandes d'ancrage et/ou des cornières peuvent être panachées dans diverses proportions. La rangée de bandes d'ancrage et/ou de cornières peut être constituée de bandes d'ancrages et/ou de cornières identiques ou différentes et la rangée de blocs de bordure peut être constituée de blocs de bordure identiques ou différents. Dans un mode de réalisation, les bandes d'ancrage et/ou les cornières présentent une longueur uniforme.

Dans un mode de réalisation, les blocs de bordure présentent une longueur uniforme. Dans ce cas, la longueur uniforme des bandes d'ancrage et/ou des cornières peut être une fraction entière ou un multiple entier de la longueur uniforme des blocs de bordure. Par exemple, dans un mode de réalisation où la longueur uniforme des bandes d'ancrage et/ou des cornières est la moitié de la longueur uniforme des blocs de bordure, les bandes d'ancrage et/ou les cornières sont alternativement disposées seulement sur un bloc de bordure ou à chevauchement sur plusieurs bloc de bordure. Dans un mode de réalisation, une bande d'ancrage et/ou une cornière peut aussi chevaucher plus de deux blocs de bordure.

Selon un mode de réalisation, la barrière thermiquement isolante d'une deuxième paroi de cuve comporte une deuxième rangée de blocs de bordure ancrés sur la deuxième paroi porteuse et juxtaposés le long de l'arête de manière à former une deuxième surface de support parallèle à la deuxième paroi porteuse,
la cuve comportant une deuxième rangée de bandes d'ancrage se développant parallèlement à l'arête, lesdites bandes d'ancrage étant portées par la deuxième surface de support et ancrées à la première paroi porteuse par une deuxième rangée de tiges d'ancrage, une, plusieurs ou chaque dite tige d'ancrage comportant une première extrémité ancrée à la première paroi porteuse et une deuxième extrémité accouplée à la deuxième rangée de bandes d'ancrage pour transmettre un effort de traction entre la deuxième rangée de bandes d'ancrage et la première paroi porteuse, une portion d'extrémité de la membrane étanche de la deuxième paroi de cuve tournée vers l'arête étant fixée de manière étanche sur ladite deuxième rangée de bandes d'ancrage,
un premier et un deuxième desdits blocs de bordure de la deuxième rangée comportant chacun une rainure ménagée dans l'épaisseur dudit bloc de bordure depuis une face supérieure dudit bloc de bordure de manière à former un espace accessible depuis la première paroi porteuse dans le bloc de bordure, une première et une deuxième desdites tiges d'ancrage de la deuxième rangée étant logées respectivement dans la rainure du premier et du deuxième bloc de bordure de la deuxième rangée,
une bande d'ancrage de la deuxième rangée de bande d'ancrage est portée à chevauchement sur le premier bloc de bordure et le deuxième bloc de bordure de la deuxième rangée, ladite bande d'ancrage comportant une première et une deuxième pattes faisant saillie respectivement depuis deux portions d'extrémité opposées de la bande d'ancrage en direction de la deuxième paroi porteuse, les première et une deuxième pattes étant engagées respectivement dans la rainure du premier bloc de bordure et du deuxième bloc de bordure de la deuxième rangée et étant respectivement accouplées à la première tige d'ancrage et à la deuxième tige d'ancrage de la deuxième rangée.

Selon un mode de réalisation, les rainures des premier et deuxième blocs de bordure de la rangée de blocs de bordure de la première paroi de cuve sont situées en face des rainures des premier et deuxième blocs de bordure de la deuxième rangée de blocs de bordures au droit de l'arête, de sorte que la première tige d'ancrage et la deuxième tige d'ancrage ancrées à la première paroi porteuse croisent respectivement la première tige d'ancrage et la deuxième tige d'ancrage ancrées à la deuxième paroi porteuse.

Selon un mode de réalisation, la cuve comporte en outre des pièces d'angles disposées sur les blocs de bordures de la première paroi de cuve et de la deuxième paroi de cuve, les pièces d'angle comportent deux portions planes situées dans les plans de la membrane étanche des première et deuxième parois de cuve, lesdites portions plane desdites pièces d'angle étant fixées de manière étanche à au moins une bande métallique de la rangée de bandes métalliques de manière à relier de manière étanche la membrane étanche de la première paroi de cuve et la membrane étanche de la deuxième paroi de cuve.

Ainsi, les pièces d'angle fixées de manière étanche sur les bandes métalliques remplissent la même fonction que la cornière ci-dessus et permettent de relier de manière étanche la membrane étanche des deux parois de cuve. En conséquence, selon un mode de réalisation, une cornière et un ensemble formé par une ou plusieurs pièce d'angle fixée de manière étanche sur des bandes métalliques peuvent se substituer l'une à l'autre, par exemple sur tout ou partie d'une arête de la cuve. Les modes de réalisations de cornières peuvent également être utilisés en combinaison le long d'une arête par exemple en alternance ou autre.

Selon un mode de réalisation, la structure porteuse comporte une troisième paroi porteuse sur laquelle est ancrée la barrière thermiquement isolante d'une troisième paroi de cuve, ladite troisième paroi de cuve comportant une membrane étanche reposant sur la barrière thermiquement isolante de ladite troisième paroi de cuve, la troisième paroi porteuse formant avec la première paroi porteuse et la deuxième paroi porteuse un coin de la structure porteuse situé à une extrémité de ladite arête,
la cuve comportant une pièce de coin étanche comportant une première aile reposant sur la barrière thermiquement isolante de la première paroi de cuve, une deuxième aile reposant sur la barrière thermiquement isolante de la deuxième paroi de cuve et une troisième aile reposant sur la barrière thermiquement isolante de la troisième paroi de cuve.

Selon un mode de réalisation, la barrière thermiquement isolante de chacune des première, deuxième et troisième parois de cuve comportant un bloc isolant de coin respectif, lesdits blocs isolants de coin étant jointifs au droit du coin de la structure porteuse.

Selon un mode de réalisation, la pièce de coin est adjacente à une dernière cornière ou une dernière bande d'ancrage de la rangée de cornières et/ou de bandes d'ancrage, la première aile de la dernière cornière ou bande d'ancrage étant reliée de manière étanche à la première aile de la pièce de coin et la deuxième aile de la dernière cornière ou bande d'ancrage étant reliée de manière étanche à la deuxième aile de la pièce de coin.

Selon un mode de réalisation, le bloc isolant de coin de la première paroi de cuve comporte une rainure ménagée dans l'épaisseur dudit bloc isolant de coin de la première paroi de cuve depuis une face supérieure dudit bloc isolant de coin de la première paroi de cuve de manière à former un espace accessible depuis la deuxième paroi porteuse dans ledit bloc isolant de coin,
le bloc isolant de coin de la deuxième paroi de cuve comportant une rainure ménagée dans l'épaisseur dudit bloc isolant de coin de la deuxième paroi de cuve depuis une face supérieure dudit bloc isolant de coin de la deuxième paroi de cuve de manière à former un espace accessible depuis la première paroi porteuse dans ledit bloc isolant de coin,

Selon un mode de réalisation, une dernière cornière ou bande d'ancrage située à l'extrémité de la rangée de cornières et/ou bandes d'ancrage de la première paroi de cuve étant disposée à chevauchement sur un bloc de bordure et le bloc isolant de coin de la première paroi de cuve, ladite cornière ou bande d'ancrage d'extrémité comportant une patte faisant saillie dans la rainure dudit bloc isolant de coin de la première paroi de cuve et étant accouplée à une dernière tige d'ancrage située à l'extrémité de la rangée de tiges d'ancrage pour transmettre un effort de traction entre ladite cornière ou bande d'ancrage et la deuxième paroi porteuse,

Selon un mode de réalisation, une dernière cornière ou bande d'ancrage située à l'extrémité de la deuxième rangée de cornières et/ou bandes d'ancrage de la deuxième paroi de cuve est disposée à chevauchement sur un bloc de bordure et le bloc isolant de coin de la deuxième paroi de cuve, ladite cornière ou bande d'ancrage d'extrémité comportant une patte faisant saillie dans la rainure dudit bloc isolant de coin de la première paroi de cuve et étant accouplée à une dernière tige d'ancrage située à l'extrémité de la rangée de tiges d'ancrage pour transmettre un effort de traction entre ladite cornière ou bande d'ancrage et la première paroi porteuse.

Selon un mode de réalisation, la cuve comporte en outre une tige d'ancrage de coin présentant une première extrémité ancrée sur la structure porteuse au niveau du coin de la structure porteuse et une deuxième extrémité attachée à la pièce de coin pour transmettre un effort de traction entre la pièce de coin et la structure porteuse et retenir la pièce de coin sur les barrières thermiquement isolantes des première, deuxième et troisième paroi de cuve, ladite tige d'ancrage de coin s'étendant selon une direction centrale de l'angle solide formé par le coin de la structure porteuse et étant attachée à une zone centrale de la pièce de coin située à la jonction entre les première, deuxième et troisième ailes de la pièce de coin.

Selon un mode de réalisation, la pièce de coin comporte une embase cylindrique creuse ouverte au niveau de la zone centrale de la pièce de coin, ladite embase présentant un fond percé, la deuxième extrémité de la tige d'ancrage de coin traversant le fond percé et étant logée dans ladite embase creuse de manière à retenir ladite embase sur la structure porteuse, une plaque métallique de coin étant fixée de manière étanche sur la pièce de coin de manière à obstruer de manière étanche l'ouverture de l'embase. Ainsi, l'accouplement de la pièce de coin avec la tige d'ancrage de coin est simple à réaliser au travers de l'ouverture de l'embase tout en conservant l'étanchéité de la pièce de coin au moyen de la plaque métallique de coin.

Selon un mode de réalisation, la dernière cornière comporte au niveau d'une extrémité de la première aile reliée de manière étanche à la première aile de la pièce de coin une troisième patte, une dernière première tige d'ancrage de la rangée de premières tiges d'ancrage étant accouplée à l'une des pattes de la paire de pattes de la première aile située au niveau de ladite extrémité de ladite première aile et à ladite troisième patte, et dans laquelle la dernière cornière comporte au niveau d'une extrémité de la deuxième aile reliée de manière étanche à la deuxième aile de la pièce de coin une quatrième patte, une dernière deuxième tige d'ancrage de la rangée de deuxièmes tiges d'ancrage étant accouplée à l'une des pattes de la paire de pattes de la deuxième aile située au niveau de ladite extrémité de ladite aile et à ladite quatrième patte.

Une telle cuve peut faire partie d'une installation de stockage terrestre, par exemple pour stocker du GPL ou être installée dans une structure flottante, côtière ou en eau profonde, notamment un navire méthanier, une unité flottante de stockage et de regazéification (FSRU), une unité flottante de production et de stockage déporté (FPSO) et autres.

Selon un mode de réalisation, l'invention fournit également un navire pour le transport d'un produit liquide froid comportant une double coque et une cuve précitée disposée dans la double coque.

Selon un mode de réalisation, l'invention fournit aussi un procédé de chargement ou déchargement d'un tel navire, dans lequel on achemine un produit liquide froid à travers des canalisations isolées depuis ou vers une installation de stockage flottante ou terrestre vers ou depuis la cuve du navire.

Selon un mode de réalisation, l'invention fournit aussi un système de transfert pour un produit liquide froid, le système comportant le navire précité, des canalisations isolées agencées de manière à relier la cuve installée dans la coque du navire à une installation de stockage flottante ou terrestre et une pompe pour entraîner un flux de produit liquide froid à travers les canalisations isolées depuis ou vers l'installation de stockage flottante ou terrestre vers ou depuis la cuve du navire.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- La figure 1 est une vue en perspective schématique d'une cuve étanche et thermiquement isolante au niveau d'un angle à 90° formé par deux parois de ladite cuve dans laquelle la membrane d'étanchéité de l'une des parois de cuve n'est pas représentée ;
- La figure 2 est une vue de détail de la cuve étanche et thermiquement isolante de la figure 1 illustrant une pluralité d'éléments calorifuges de bordure et de cornières au niveau dudit angle de la cuve ;
- La figure 3 est une vue en perspective schématique d'un élément calorifuge de bordure de la figure 2 dans lequel le panneau de couvercle n'est pas représenté ;
- La figure 4 est une vue en perspective schématique de l'élément calorifuge de bordure de la figure 3 illustrant le panneau de couvercle dudit élément calorifuge de bordure ;
- La figure 5 est une vue en perspective schématique d'une cornière ;
- La figure 6 est une vue en perspective schématique d'une structure de coin au niveau de la jonction de trois parois de la cuve de la figure 1 ;
- la figure 7 est une vue en perspective schématique de dessous de la pièce d'angle de la figure 6 formant le coin de membrane étanche ;
- La figure 8 est une vue en perspective schématique d'une cornière d'extrémité de la rangée de cornière destinée à coopérer avec un élément calorifuge de coin.
- La figure 9 est une vue en perspective schématique d'un élément calorifuge de bordure selon une variante de réalisation ;
- La figure 10 est une vue de dessus d'une barrière d'une paroi longitudinale de cuve étanche et thermiquement isolante au niveau d'une arête avec une paroi transversale de la cuve dans laquelle la membrane étanche n'est pas illustrée de façon à montrer la coopération des bandes d'ancrage avec les tiges d'ancrage dans cette variante de réalisation ;
- La figure 11 est une représentation schématique écorchée d'une cuve de navire méthanier et d'un terminal de chargement/déchargement de cette cuve.

### Description détaillée de modes de réalisation

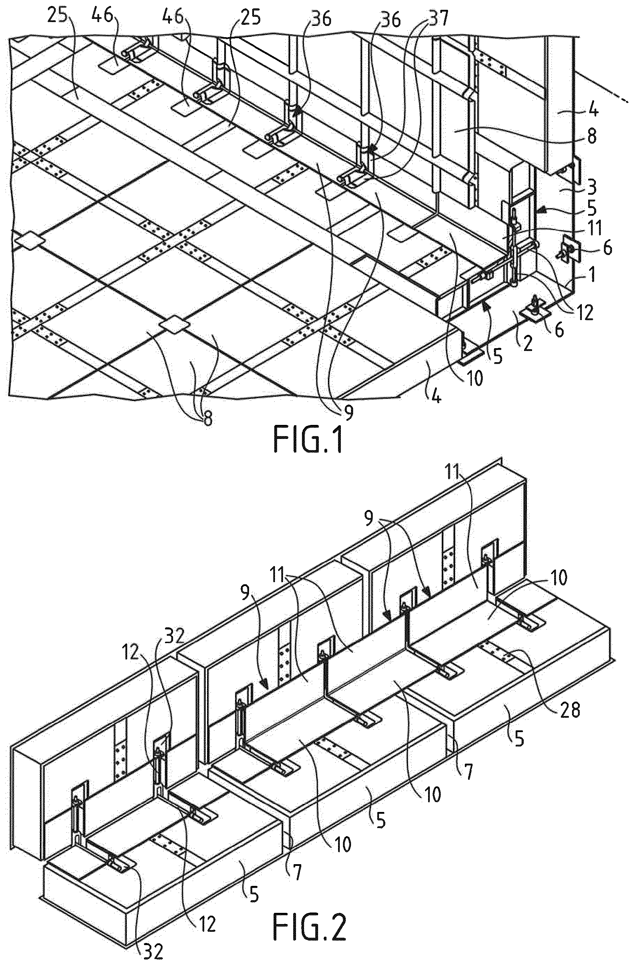

Les figures sont décrites ci-après dans le cadre d'une structure porteuse constituée par les parois internes d'une double coque d'un navire pour le transport de gaz liquéfié. Une telle structure porteuse présente une géométrie polyédrique, par exemple de forme prismatique. Une telle structure porteuse comporte par exemple des parois longitudinales s'étendant parallèlement à la direction longitudinale du navire et formant une section polygonale dans un plan perpendiculaire à la direction longitudinale du navire. Ces parois longitudinales se rejoignent en des arêtes longitudinales, qui forment par exemple des angles de l'ordre de 135° dans une géométrie octogonale. La structure générale de telles cuves polyédriques est par exemple décrite en regard de la figure 1 du document FR3008765.

Ces parois longitudinales sont interrompues dans la direction longitudinale du navire par des parois porteuses transversales qui sont perpendiculaires à la direction longitudinale du navire. Les parois longitudinales et les parois transversales se rejoignent au niveau d'arêtes avant et arrière.

Chaque paroi de la structure porteuse porte une paroi de cuve respective. Chacune des parois de cuve est composée d'au moins une barrière thermiquement isolante portant une membrane d'étanchéité au contact d'un fluide stocké dans la cuve tel que du gaz naturel liquéfié (GNL), du gaz de pétrole liquéfié comportant du butane, du propane, du propène ou autre.

Par convention, l'adjectif « supérieur » appliqué à un élément de la cuve désigne la partie de cet élément orientée vers l'intérieur de la cuve et l'adjectif « inférieur » désigne la partie de cet élément orientée vers l'extérieur de la cuve, quelle que soit l'orientation de la paroi de cuve par rapport au champ de gravité terrestre. De même, le terme « au-dessus » désigne une position située plus près de l'intérieur de la cuve et le terme « en dessous » une position située plus près de la structure porteuse, quelle que soit l'orientation de la paroi de cuve par rapport au champ de gravité terrestre. En outre, les parois de cuve présentant une structure similaire, la description d'un élément d'une paroi de cuve décrit ci-après s'applique par analogie aux autres parois de cuve. Ainsi, la description ci-après des figures 1 à 8 est réalisée dans le cadre d'un angle de cuve à 90°, cependant cette description est également applicable par analogie à des angles de cuve présentant d'autre configurations telles que formant des angles à 135°.

La figure 1 illustre un angle de cuve au niveau d'une arête 1, avant ou arrière, entre une paroi porteuse longitudinale 2 et une paroi porteuse transversale 3 de la structure porteuse formant un angle de l'ordre de 90°. Une paroi de cuve longitudinale paroi de cuve longitudinale est ancrée sur la paroi porteuse longitudinale 2 et une paroi de cuve transversale est ancrée sur la paroi porteuse transversale 3.

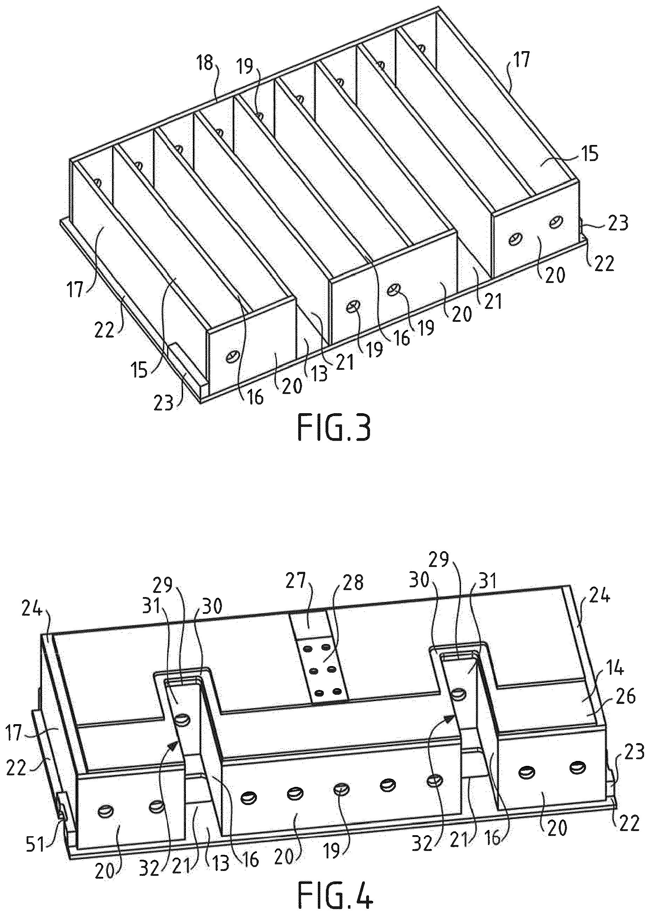

La barrière thermiquement isolante de la paroi de cuve longitudinale est constituée d'une pluralité d'éléments calorifuges ancrés sur toute la paroi porteuse longitudinale 2. Ces éléments calorifuges forment conjointement une surface plane sur laquelle est ancrée la membrane d'étanchéité de la paroi de cuve longitudinale. Ces éléments calorifuges comportent une pluralité d'éléments calorifuges courants 4juxtaposés selon un maillage rectangulaire régulier. La barrière thermiquement isolante de la paroi de cuve longitudinale comporte également une rangée d'éléments calorifuges de bordure 5 décrits ci-après en regard des figures 3 et 4, disposés le long de l'arête 1. Les éléments calorifuges 4, 5 sont ancrés sur la structure porteuse par tout moyen adapté, comme par exemple à l'aide d'organes d'ancrage 6. De tels organes d'ancrage 6 peuvent être réalisés de nombreuses manières et sont par exemple décrits dans le document WO2017064413.

Les éléments calorifuges 4, 5 reposent sur la paroi porteuse longitudinale 2 par l'intermédiaire de cordons de mastic (non illustrés) formant des lignes parallèles rectilignes ou ondulées. Une pluralité d'espaces intercalaires 7 séparent deux à deux les éléments calorifuges de bordure 5 adjacents. Les espaces intercalaires 7 de deux parois de cuve au droit de l'arête 1 sont de préférence alignés comme illustré sur la figure 2.

La membrane d'étanchéité de la paroi de cuve longitudinale est constituée d'une pluralité de plaques métalliques 8 juxtaposées les unes aux autres avec recouvrement. Ces plaques métalliques 8 sont de préférence de forme rectangulaire. Les plaques métalliques 8 sont soudées entre elles afin d'assurer l'étanchéité de la membrane d'étanchéité. Les plaques métalliques 8 sont par exemple réalisées en acier inoxydable de 1.2mm d'épaisseur.

Afin de permettre la déformation de la membrane d'étanchéité en réponse aux différentes contraintes subies par la cuve, en particulier en réponse à la contraction thermique résultant du chargement de gaz liquéfié dans la cuve, les plaques métalliques 8 comportent une pluralité d'ondulations orientées vers l'intérieur de la cuve. Plus particulièrement, la membrane d'étanchéité de la paroi de cuve comporte deux séries d'ondulations perpendiculaires un motif rectangulaire régulier. De préférence, les ondulations se développent parallèlement aux bords des plaques métalliques 8 rectangulaires.

Afin de relier la membrane étanche de la paroi de cuve longitudinale et la membrane étanche la paroi de cuve transversale, la cuve comporte une rangée de cornières 9 métalliques agencée au droit de l'arête 1. Ces cornières 9 sont alignées le long de l'arête 1. Ces cornières 9 sont reliées de manière étanche deux à deux le long de l'arête 1 de façon à assurer l'étanchéité de la membrane étanche au droit de l'arête 1.

Comme illustré sur les figures 1 et 2, les cornières 9 comportent une première aile 10 et une deuxième aile 11. Ladite première aile 10 se développe parallèlement à la paroi porteuse longitudinale 2. Cette première aile 10 repose sur un ou plusieurs éléments calorifuges de bordure 5 de la paroi de cuve longitudinale. De même, la deuxième aile 11 repose sur un ou plusieurs éléments calorifuges de bordure 5 de la paroi de cuve transversale et se développe parallèlement à la paroi porteuse transversale 3. Une extrémité de la membrane étanche de la paroi de cuve longitudinale est ancrée de manière étanche, par exemple au moyen d'une soudure à recouvrement, sur les premières ailes 10 de la rangée de cornières 9. De même, une extrémité de la membrane étanche de la paroi de cuve transversale est ancrée sur les deuxièmes ailes 11 de la rangée de cornière 9.

En outre, la cornière 9 est ancrée sur les parois porteuses 2, 3 formant l'arête 1 au moyen de tiges d'ancrage 12 illustrées sur la figure 1. Chacune de ces tiges d'ancrage 12 comporte une première extrémité ancrée sur une paroi porteuse 2, 3 respective et une deuxième extrémité accouplée à deux cornières 9 adjacentes correspondantes pour transmettre les efforts de traction subis par lesdites cornières9 directement à ladite paroi porteuse. Ces tiges d'ancrage 12 se développent parallèlement à la paroi porteuse sur laquelle elles ne sont pas ancrées formant l'arête 1. Autrement dit, les tiges d'ancrage 12 ancrées sur la paroi porteuse longitudinale 2 se développent parallèlement à la paroi porteuse transversale 3 et inversement. De telles tiges d'ancrage 12 sont par exemple décrites dans le document WO2017064413 en regard des figures 4 à 6, 9, 14 ou 16.

Les figures 3 et 4 illustrent un élément calorifuge de bordure 5 utilisé pour réaliser les rangées d'éléments calorifuges de bordure 5 illustrées sur les figures 1 et 2. Cet élément calorifuge de bordure 5 est décrit dans le cadre d'un élément calorifuge de bordure de paroi longitudinale au niveau de l'arête 1, ses caractéristiques pouvant être appliquées par analogie à d'autres éléments calorifuges de bordure 5 de la cuve.

L'élément calorifuge de bordure 5 comporte un panneau de fond 13, des panneaux de côté et un panneau de couvercle 14. Tous ces panneaux sont de forme rectangulaire et délimitent ensemble un espace interne de l'élément calorifuge de bordure 5 dans lequel est logée une garniture calorifuge 15. Cette garniture calorifuge 15 est de préférence non structurelle, par exemple de la perlite ou de la laine de verre.

Le panneau de fond 13 et le panneau de couvercle 14 se développent parallèlement l'un de l'autre et, comme illustré sur la figure 2, parallèlement à la paroi porteuse longitudinale 2 sur laquelle ils sont ancrés. Les panneaux de côté se développent perpendiculairement au panneau de fond 13. Les panneaux de côté relient le panneau de fond 13 et le panneau de couvercle 14 de manière à former un caisson isolant globalement parallélépipédique. Des entretoises porteuses 16 sont disposées entre le panneau de fond 13 et le panneau de couvercle 14 dans l'espace interne de l'élément calorifuge de bordure 5. Les panneaux et les entretoises porteuses 16 sont attachés par tout moyen approprié, par exemple agrafes, vis, pointes ou autres.

Ces entretoises porteuses 16 se développent perpendiculairement à la paroi porteuse transversale 2 et perpendiculairement à la paroi porteuse longitudinale 3 formant l'arête 1. Ces entretoises porteuses 16 sont espacées deux à deux d'un pas d'écartement régulier. En outre des panneaux de côté longitudinaux 17 formant les bords longitudinaux de l'élément calorifuge de bordure 5 sont agencés parallèlement aux entretoises porteuses 16. Ces panneaux de côté longitudinaux 17 sont espacés du pas d'écartement régulier d'entretoises porteuses 16 adjacentes.

Un premier côté transversal de l'élément calorifuge de bordure 5 en vis-à-vis des éléments calorifuges courant 4 est formé par un premier panneau de côté transversal 18 se développant parallèlement à la paroi porteuse transversale 2. Ce premier panneau de côté transversal 18 comporte des orifices traversant 19 destinés à permettre la circulation de gaz inerte dans la barrière thermiquement isolante.

Un deuxième côté de l'élément calorifuge de bordure 5 parallèle et en vis-à-vis de la paroi porteuse transversale 3 est formé de trois plaques 20 disjointes. Chacune de ces plaques 20 se développe parallèlement à la paroi transversale 3. En outre, des bords de ces plaques 20 sont agencés au droit d'entretoises porteuses 16 ou de panneaux de côtés longitudinaux de manière à affleurer avec lesdites entretoises porteuses 16 ou lesdits panneaux de côtés longitudinaux 17. Les entretoises porteuses 16 au droit desquelles sont agencées deux plaques 20 adjacentes sont également adjacentes, de sorte que les plaques 20 sont séparées deux à deux du pas régulier séparant deux entretoises porteuses 16 adjacentes. Autrement dit, le deuxième côté de l'élément calorifuge de bordure 5 présente deux ouvertures 21 délimitées par les plaques 20 et correspondant à l'espacement entre deux entretoises porteuses 16 adjacentes au droit desquelles les bords desdites plaques 20 sont agencés.

Le panneau de fond 13 comporte des rebords 22 faisant saillie depuis les panneaux de côté longitudinaux 17 et du premier panneau de côté transversal 18. Des tasseaux 23 sont portés par les rebords 22 et coopèrent avec des organes d'ancrage 6 permettant d'ancrer l'élément calorifuge de bordure 5 sur la paroi porteuse. De tels rebords 22, tasseaux 23 et organes d'ancrage 6 peuvent être réalisés de nombreuses manières et sont par exemple décrits dans le document WO2017064413.

Comme illustré sur la figure 4, le tasseau 23 et le rebord 22 sur lequel ledit tasseau 23 repose peuvent comporter dans leur épaisseur un renfoncement 51. Ce renfoncement 51 se développe dans la direction de longueur des éléments calorifuges sur toute l'épaisseur du tasseau 23 et sur toute l'épaisseur du rebord 22. Les renfoncements 51 de deux éléments calorifuges de bordure 5 adjacents forment ainsi une cheminée permettant de loger un goujon de l'organe d'ancrage 6. Cet arrangement du tasseau 23 et du rebord 22 permet ainsi de réduire l'espacement nécessaire entre lesdits éléments calorifuges de bordure 5 adjacents.

Le panneau de couvercle 14 comporte sur une face supérieure opposée à la garniture calorifuge 15 des décrochements 24 au niveau de chaque côté de l'élément calorifuge de bordure 5 présentant un rebord 22. Ces décrochements 24 sont situés au droit des panneaux de côté 17, 18 correspondant et forment une zone de support pour des éléments de pontage 25 disposés entre deux éléments calorifuges 4, 5 adjacents afin de constituer une surface de support continue pour la membrane étanche. De tels décrochements 24 et de tels éléments de pontage 25 peuvent être réalisés de nombreuses manières et sont par exemple décrits dans le document WO2017064413.

La face supérieure du panneau de couvercle 14 comporte en outre un lamage transversal 26 et un lamage longitudinal 27.

Le lamage transversal 26 se développe selon une direction parallèle à la paroi porteuse transversale sur toute la iongueur du panneau de couvercle 14 seion ladite direction parallèle à l'arête 1. Le lamage transversal 26 se développe depuis un bord du panneau de couvercle 14 situé au droit des plaques 20 délimitant le deuxième côté de l'élément calorifuge de bordure 5. Ce lamage transversal 26 se développe par exemple sur une distance sensiblement égale au tiers de la largeur du panneau de couvercle 14 selon une direction perpendiculaire à la paroi porteuse transversale 3.

Le lamage longitudinal 27 se développe selon une direction perpendiculaire à la paroi porteuse transversale 3 et relie le décrochement 24 au droit du premier panneau de côté transversal 18 et le lamage transversal 26. De préférence, ce lamage longitudinal 27 est centré sur le panneau de couvercle 14 selon une direction parallèle à l'arête 1. Une bande d'ancrage longitudinale 28 est disposée dans ce lamage longitudinal 27 afin d'ancrer, par exemple par soudure à recouvrement, deux plaques métalliques 8 adjacentes de la membrane étanche de la paroi de cuve.

Le panneau de couvercle 14 présente en outre deux découpes 29 situées au droit des ouvertures 21 du deuxième côté de l'élément calorifuge de bordure 5. Ces découpes 29 se développent selon une direction perpendiculaire à la paroi transversale 3 supérieure à la largeur du lamage transversal 26 prise selon cette même direction. Le lamage transversal 26 est prolongé autour de la découpe 29 par un lamage 30respectif entourant ladite découpe 29 au-delà du lamage transversal 26 selon ladite direction perpendiculaire à la paroi porteuse transversale 3. Des plaques de fermeture 31 relient le panneau de couvercle 14 et le panneau de fond 13 entre les entretoises porteuses 16 adjacentes situées au droit des découpes 29. Ainsi, l'élément calorifuge de bordure 5 présente deux rainures 32 ménagées dans l'épaisseur dudit élément calorifuge de bordure 5 et délimitées chacune par l'ouverture 21, la découpe 29, les entretoises porteuses 16 adjacentes affleurant avec l'ouverture 21 et la plaque de fermeture 31. Ces rainures 32 sont de préférence centrées entre le lamage longitudinal 27 et les panneaux de cotés longitudinaux 17. La rainure 32 présente des dimensions permettent de loger une tige d'ancrage 12. De préférence, la garniture calorifuge 15 est disposée dans l'élément calorifuge de bordure 5 entre les entretoises porteuses 16 adjacentes à l'exception des entretoises porteuses 16 adjacentes délimitant les rainures 32 afin de permettre de loger des tiges d'ancrage 12 dans lesdites rainures 32.

De nombreuses méthodes peuvent être utilisées pour réaliser le panneau de couvercle 14. Dans le mode de réalisation illustré sur la figure 4, des plaques de contreplaqué présentant des dimensions différentes sont superposées afin de former le panneau de couvercle 14 présentant les décrochements 24 et les lamages 26, 27, 30. Dans un mode de réalisation non illustré, le panneau de couvercle 14est réalisé par une plaque de contreplaqué dans laquelle les décrochements 24 et les lamages 26, 27, 30 sont directement réalisés.

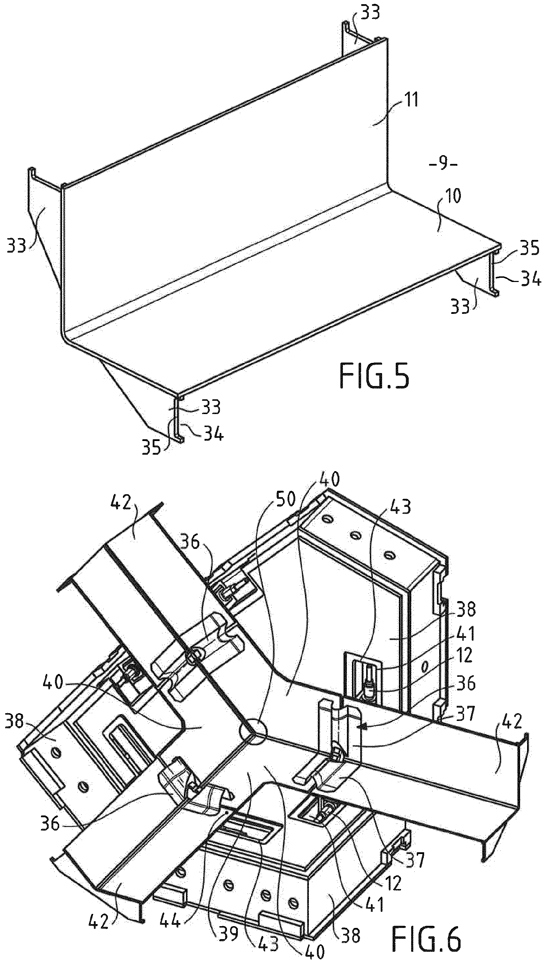

Comme illustré sur la figure 5, chaque aile 10, 11 de la cornière 9 présente une paire de pattes 33. Les pattes 33 de chaque paire de pattes 33 sont disposées à des extrémités latérales opposées de l'aile 10, 11 et sont donc espacées l'une de l'autre le long de l'arête 1. On entend par disposées aux extrémités latérales le fait que lesdites pattes 33 soient plus proches des bords de l'aile 10, 11 que du milieu de l'aile 10, 11 selon une direction parallèle à l'arête 1. Ces pattes 33 font saillie depuis une face inférieure de l'aile 10, 11 perpendiculairement à ladite aile 10, 11. Une extrémité de la patte 33 opposée à la jonction entre les ailes 10, 11 présente une découpe 34. Un fond 35 de cette découpe 34 se développe perpendiculairement à l'aile 10, 11 depuis laquelle fait saillie ladite patte 33. Ces pattes 33 de la première aile 10 peuvent être coplanaires avec une patte 33 correspondante de la deuxième aile 11. Avantageusement, les pattes 33 de la première aile 10 et les pattes 33 de la deuxième aile 11 sont réalisées de façon continue. De telles pattes 33 continues sur les ailes 10, 11 augmentent la rigidité de la cornière 9. Dans un autre mode de réalisation, les pattes 33 des ailes 10, 11 sont discontinues au niveau de l'arête.

Comme illustré sur la figure 2, les cornières 9 ont une dimension selon une direction parallèle à l'arête 1 égale à la moitié de la dimension des éléments calorifuges de bordure 5 selon cette même direction. La rangée de cornières 9 comporte ainsi une alternance de cornières 9 reposant sur deux éléments calorifuges de bordure 5 adjacents et de cornières 9 reposant sur un seul desdits éléments calorifuge de bordure 5.

Par ailleurs, les ailes 10 des cornières 9 présentent une longueur selon une direction perpendiculaire à la paroi porteuse transversale 3 sensiblement égale à la longueur des lamages transversaux 26 des éléments calorifuges de bordure 5 sur lesquelles lesdites ailes 10 reposent selon cette même direction. Les ailes 10 sont logées dans et présentent une épaisseur sensiblement égale à la profondeur des lamages transversaux 26 de sorte qu'une face supérieure des ailes 10 affleure avec une surface supérieure du panneau de couvercle 14 et des bandes d'ancrage longitudinales 28. Comme illustré sur la figure 1, des plaques de pontage 46 analogues aux plaques de pontage 25 sont disposées dans le lamage 30 entourant les rainures 32 et affleurent avec la face supérieure du panneau de couvercle 14. Ainsi, les ailes 10, la bande d'ancrage longitudinale 28 et la surface supérieure du panneau de couvercle 14 et les plaques de pontage 46 forment conjointement une surface de support sensiblement plane et continue pour recevoir l'extrémité de la membrane étanche de la paroi de cuve longitudinale. Les ailles 11 des cornières 9 sont agencées de façon analogue sur les éléments calorifuges de bordure 5 de la paroi de cuve transversale.

Les cornières 9 sont agencées sur les éléments calorifuges de bordure 5 de sorte que les pattes 33 d'une cornière 9 soient logées dans une rainure 32 respective d'un élément calorifuge de bordure 5 correspondant sur laquelle ladite cornière 9 repose. Ainsi, la patte 33 fait saillie d'une aile 10, 11 et traverse une découpe 29 du panneau de couvercle 14 sur laquelle ladite aile 10, 11 repose. En outre, les cornières 9 étant juxtaposées le long de l'arête 1, une même rainure 32 loge une patte 33 respective de chacune des deux cornières 9 adjacentes se joignant au niveau de ladite rainure 32.

De préférence, les pattes 33 font saillie des ailes 10, 11 à distance des bords des ailes 10, 11 de sorte que l'extrémité de l'aile 10, 11 formant ledit bord recouvre au moins partiellement la découpe 29. Cet agencement permet à deux cornières 9 adjacentes de recouvrir le plus possible les découpes 29 des éléments calorifuges de bordure 5 sur lesquels elle repose et donc de réduire l'espace nécessaire pour relier de manière étanche lesdites cornières 9 adjacentes. La liaison étanche entre deux cornières 9 adjacente peut être réalisée de nombreuses manières, par exemple au moyen d'une pièce de jonction ondulée 36 telle qu'illustrée sur la figure 6. De telles pièces de jonction ondulées 36 comportent deux embases 37 planes entourant une ondulation et formant un angle correspondant à l'angle des cornières 9. Ces embases planes 37 sont par exemple soudées à recouvrement sur les extrémités des cornières 9 adjacentes.

Comme illustrée sur la figure 1, chaque rainure 32 loge en outre une tige d'ancrage 12. De préférence, comme illustré sur la figure 1, les rainures 32 les éléments calorifuges de bordures 5 ancrés sur la paroi porteuse transversale 3 sont alignées avec les éléments calorifuges de bordures 5 ancrés sur la paroi porteuse longitudinales de sortes que les rainures 32 desdits éléments calorifuges de bordure 5 sont alignées dans un plan perpendiculaires à l'arête 1. Ainsi, les tiges d'ancrage 12 ancrées sur la paroi porteuse longitudinale 2 sont croisées avec les tiges d'ancrage 12 ancrées sur la paroi porteuse transversale 3.

Les tiges d'ancrage 12 sont accouplées avec les pattes 33 logées dans lesdites rainures 32. Ainsi, les ailes 10, 11 d'une cornière 9 sont ancrées au moyen de deux tiges d'ancrage 12 logées dans des rainures 32 respectives ménagées dans le ou les éléments calorifuges de bordure 5 sur lequel ou sur les lesquels repose ladite aile 10, 11 de la cornière 9. La coopération entre les tiges d'ancrage 12 de manière à accoupler les pattes 33 et les tiges d'ancrage 12 peut être réalisée de nombreuses manières, par exemple de façon analogue à la coopération entre les tiges d'ancrage et les pattes décrite dans le document WO2017064413 c'est-à-dire à l'aide d'une extrémité de la tige d'ancrage comportant un crochet en « U » dont chaque branche coopère avec le fond 35 d'une patte 33.

Les tiges d'ancrage 12 étant logées dans les rainures 32 ménagées dans les éléments calorifuges de bordure 5 ne nécessitent avantageusement pas de dimensionner l'espacement entre les éléments calorifuges de bordure 5 pour loger lesdites tiges d'ancrage 12. Ainsi, l'écartement entre deux éléments calorifuges de bordure 5 le long de l'arête 1 peut être réduit au seul écartement nécessaire au logement des organes d'ancrage 6 des éléments calorifuges de bordure 5 par exemple l'écartement est d'environ 50 mm.

En outre, les cornières 9 étant directement ancrées sur chacune des parois porteuses 2, 3 formant l'arête 1 via les tiges d'ancrage 12, il n'est pas nécessaire de fixer lesdites cornières sur les éléments calorifuges de bordure 5. Ainsi, les cornières 9 peuvent reposer directement dans les lamages transversaux 26 et ne nécessitent pas d'ancrage par vissage, rivetage ou autre sur les éléments calorifuges de bordure 5.

Dans un mode de réalisation non illustré, les cornières 9 présentent une longueur selon une direction parallèle à l'arête 1 identique à la longueur des éléments calorifuges de bordure 5 selon cette même direction. En outre, chaque élément calorifuge de bordure 5 ne comporte qu'une unique rainure 32 centrée selon cette direction parallèle à l'arête 1. Ainsi, le lamage longitudinal 27 est disposé au droit de la rainure 32 et prolonge le lamage 30 entourant la rainure 32.

Avantageusement, dans ce mode de réalisation non illustré, chaque aile 10, 11 des cornières 9 chevauche deux éléments calorifuges de bordure 5 adjacents de sorte que les pattes 33 de ladite aile 10, 11 soient chacune logées dans une rainure 32 de l'un des éléments calorifuges de bordure 5 sur lesquels repose ladite aile 10, 11.

Dans un autre mode de réalisation non illustré, les cornières 9 présentent une longueur selon une direction parallèle à l'arête 1 égale à la moitié de la longueur des éléments calorifuges de bordure 5 selon cette même direction. Par ailleurs l'élément calorifuge de bordure 5 présente une unique rainure 32 centrée sur ledit élément calorifuge de bordure 5 selon cette même direction. En outre, des tiges d'ancrage 12 sont disposées à la fois dans les rainures 32 ménagées dans les éléments calorifuges bordure 5 et entre lesdits éléments calorifuges de bordure 5. Chaque cornière 9 repose sur un élément calorifuge de bordure 5 respectif et présente d'une part une patte 33 logée dans la rainure 32 dudit élément calorifuge de bordure 5 et accouplée avec la tige d'ancrage 12 logée dans ladite rainure 32 et, d'autre part, une patte 33 logée dans l'espace entre ledit élément calorifuge de bordure 5 et un élément calorifuge de bordure 5 adjacent et coopérant avec une tige d'ancrage 12 logée dans ledit espace.

La figure 6 illustre un coin de cuve au niveau de la jonction entre deux parois porteuses longitudinale 2 et une paroi porteuse transversale 3. La barrière thermiquement isolante de chacune des parois de cuve comporte un élément calorifuge de coin 38 prolongeant les rangées d'éléments calorifuges de bordure 5 le long des arêtes des parois porteuses 2, 3 se rejoignant au niveau dudit coin. Une pièce de coin 39 repose sur les éléments calorifuges de coin 38. Cette pièce de coin 39 comporte trois ailes de coin 40 se développant chacune dans un plan parallèle à une paroi porteuse 2, 3 respective et reposant sur un élément calorifuge de coin 38 d'une paroi de cuve correspondante. Cette pièce de coin 39 est ancrée au niveau du coin de la structure porteuse par une unique tige d'ancrage de coin.

Seules des caractéristiques de l'élément calorifuge 38 de coin d'une paroi de cuve longitudinale sont décrites ci-après, cette description s'appliquant par analogie aux autres éléments calorifuges de coin 38 des autres parois de cuve. De même, la coopération entre une aile de coin 40 reposant sur ledit élément calorifuge de coin 38 et la rangée de cornières 9le long de l'arête 1 décrite ci-après s'applique par analogie à la coopération entre les autres ailes de coin 40 et les autres rangées de cornière 9 le long des autres arêtes formant le coin.

L'élément calorifuge de coin 38 illustré sur la figure 6 comporte dans son épaisseur une rainure 41 en vis-à-vis de la paroi porteuse transversale 3 analogue aux rainures 32 décrites ci-dessus. En outre, cet élément calorifuge de coin 38 comporte un lamage de coin prolongeant le long de l'arête 1 le lamage transversal 26 des éléments calorifuges de bordure 5 dans lesquels sont logées les cornières 9 le long de l'arête 1.

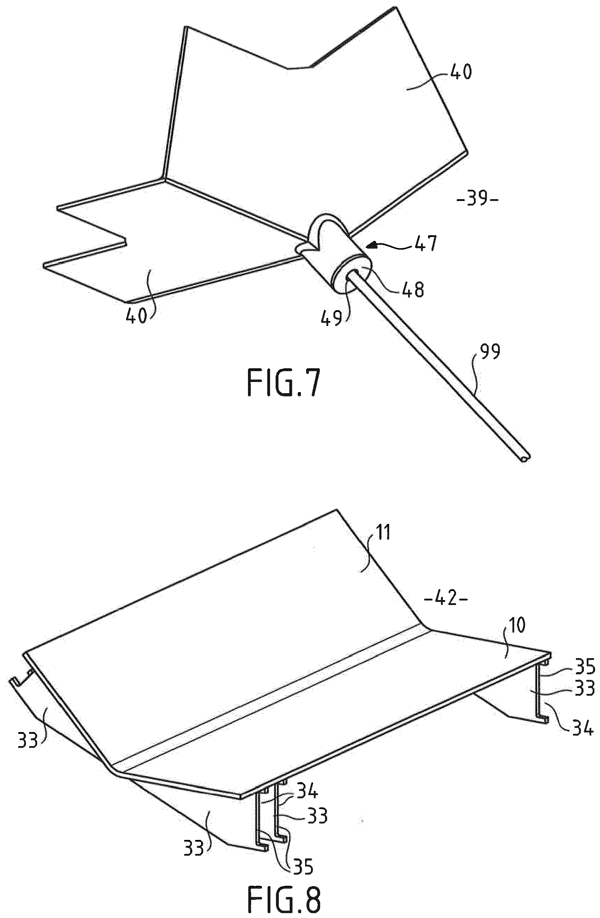

La figure 7 est une vue en perspective schématique de dessous de la pièce de coin 39 formant le coin de membrane étanche. La pièce de coin 39 comporte une embase cylindrique 47 creuse dont une ouverture interne débouche au niveau du coin formé par la jonction des trois ailes de coin 40. Cette embase cylindrique 47 comporte un fond 48 percé d'un orifice traversant 49.

Lors de la fabrication de la cuve, une tige d'ancrage de coin 99 s'étendant selon une direction centrale de l'angle solide formé par le coin de la structure porteuse est soudée sur la structure porteuse au niveau dudit coin de la structure porteuse. Pour cela, une plaque d'ancrage (non représentée) se développant dans un plan perpendiculaire à la direction de la tige d'ancrage de coin 99 est fixée à une première extrémité de ladite tige d'ancrage de coin 99. Des bords de cette plaque d'ancrage sont alors soudés à des parois porteuses respectives formant ledit coin afin d'ancrer la tige d'ancrage de coin sur la structure porteuse au niveau de sa première extrémité.

Lorsque la pièce de coin 39 est installée sur les éléments calorifuges de coin 38, une deuxième extrémité de la tige de coin 99 opposée à la première extrémité de la tige de coin est insérée dans l'embrase cylindrique 47 au travers de l'orifice traversant 49 du fond 48 de l'embase cylindrique 47 de manière à faire saillie dans l'espace interne de ladite embrase cylindrique 47. Un écrou est alors fixé sur cette deuxième extrémité de la tige d'ancrage de coin dans l'espace interne de l'embase cylindrique 47 afin d'accoupler ladite embase cylindrique 47 sur la tige d'ancrage de coin. Une plaque métallique de coin 50 telle qu'illustrée sur la figure 6 est alors rapportée et soudée de manière étanche sur la pièce de coin 39 au niveau de l'embase cylindrique 47 afin de fermer de manière étanche ladite embase cylindrique 47 et assurer l'étanchéité de la pièce de coin au niveau du coin de la membrane étanche.

Comme qu'illustrée sur la figure 6, une cornière d'extrémité 42 de la rangée de cornières 9 repose conjointement sur l'élément calorifuge de coin 38 et un élément calorifuge de bordure d'extrémité 5 adjacent audit élément calorifuge de coin 38.

Cette cornière d'extrémité 42 présente au niveau de son extrémité la plus proche du coin deux pattes 33 faisant saillie en direction de la paroi porteuse longitudinale 2. En outre, cette cornière d'extrémité 42 recouvre intégralement une découpe 43 de la rainure 41 analogue à la découpe 29 des éléments calorifuge de bordure 5. Autrement dit, le bord 44 de l'extrémité de la cornière d'extrémité 42 depuis laquelle font saillie lesdites deux pattes 33 logées dans la rainure 41 repose sur le lamage de coin au-delà de la rainure 41 de l'élément calorifuge de coin 38.

Par ailleurs, Une tige d'ancrage 12 est logée dans la rainure 41 de l'élément calorifuge de coin 38 et est accouplée aux deux pattes 33 de la cornière d'extrémité 42 logées dans ladite rainure 41 afin d'ancrer la cornière d'extrémité 42 sur la paroi porteuse transversale 3.

Une cornière d'extrémité 42 dans le cadre d'une arête de la structure porteuse à 135° est illustrée schématiquement à la figure 8 et montre que l'extrémité de ladite cornière d'extrémité 42 présente deux pattes 33 faisant saillie de la première aile 10 afin de coopérer avec la tige d'ancrage d'extrémité logée dans l'élément calorifuge de coin 38 correspondant.

Dans un mode de réalisation non illustré, la cornière d'extrémité 42 est identique aux autres cornières 9 de la rangée de cornière 9 et ne présente qu'une patte 33 logée dans la rainure 41 de l'élément calorifuge de coin 38, cette unique patte 33 étant accouplée à la tige d'ancrage 12 logée dans ladite rainure 41.

L'aile de coin 40 repose dans le lamage de coin de l'élément calorifuge de coin 38. Cette aile de coin prolonge et affleure avec la cornière d'extrémité 42. Une pièce de jonction ondulée 36 telle que décrite ci-dessus est fixée de manière étanche, par exemple par soudure à recouvrement, conjointement sur la cornière d'extrémité 42 et l'aile de coin 40.

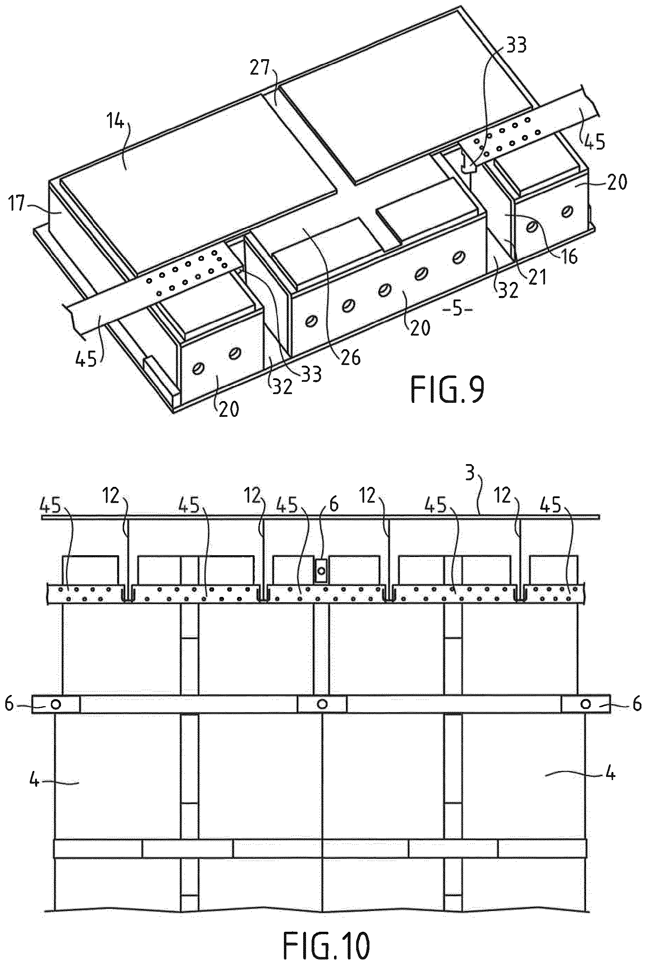

La figure 9 illustre un élément calorifuge de bordure 5 selon un deuxième mode de réalisation qui diffère du premier mode de réalisation illustré sur les figures 1 à 6 en ce que les cornières 9 sont remplacées par des bandes d'ancrages transversales 45 retenues de manière étanche par des pièces d'angle rapportées sur elles comme décrit dans le document WO2017064413. Les éléments identiques ou présentant la même fonction que des éléments décrits ci-dessus en regard des figures 1 à 8 portent les mêmes références.

Dans ce deuxième mode de réalisation, le lamage transversal 26 d'un élément calorifuge de bordure 5 ne se développe pas depuis le deuxième côté transversal dudit élément calorifuge de bordure 5. Ce lamage transversal 26 est par exemple situé à une distance prise perpendiculairement à la paroi transversale 3 du deuxième côté transversal sensiblement égale au tiers de la largeur de l'élément calorifuge de bordure 5 selon ladite direction. Le lamage longitudinal 27 lui se développe depuis le premier côté transversal jusqu'au deuxième côté transversal sur toute la largeur de l'élément calorifuge de bordure selon une direction perpendiculaire à la paroi porteuse transversale.

Comme illustré sur la figure 10,ce deuxième mode de réalisation comporte une rangée de bandes d'ancrage transversales 45 présentant chacune une structure analogue aux bandes d'ancrages décrites dans le document WO2017064413, c'est-à-dire que ces bandes d'ancrage transversales 45 présentent deux extrémités opposées repliées pour former des pattes 33 se développant en direction de la paroi porteuse longitudinale. Ces bandes d'ancrage transversales 45 sont planes et se développent parallèlement à l'arête 1 à distance du deuxième côté transversal des éléments calorifuges de bordure sur lesquels elles reposent. Autrement dit, chaque bande d'ancrage transversale 45 ne repose que sur une unique rangée d'éléments calorifuge de bordure 5 et ne se développe que parallèlement à une membrane étanche d'une unique paroi de cuve.

Ces bandes d'ancrage transversales 45 présentent une longueur prise selon une direction parallèle à l'arête 1 sensiblement égale à la moitié de la longueur prise selon cette direction des éléments calorifuges de bordure 5. Ainsi, de façon analogue aux cornières 9 décrites ci-dessus en regard des figures 1 à 8, la rangée de bande d'ancrage transversales 45 présente une alternance de bandes d'ancrage transversales 45 portées par un seul élément calorifuge de bordure 5 et de bandes d'ancrage transversales 45 portées conjointement par deux éléments calorifuges de bordure 5 adjacents.

De même, les pattes 33 de chaque bande d'ancrage transversales 45 sont logées dans deux rainures 32 adjacentes le long de l'arête, que ces deux rainures 32 adjacentes soient ménagées dans un même élément calorifuge de bordure 5 ou dans deux éléments calorifuges de bordure 5 adjacents. La figure 10 illustre par ailleurs schématiquement la coopération entre les tiges d'ancrage 12 et les pattes 33 des différentes bandes d'ancrage 45, cette coopération étant analogue à la coopération entre les pattes 33 des cornières 9 et les tiges d'ancrage 12 des figures 1 à 8.

Pour assurer la continuité de la membrane étanche au niveau de l'arête 1, une rangée de pièces métalliques d'angle est disposée sur les éléments calorifuges de bordure 5 perpendiculaires au droit de l'arête 1. Une telle rangée de pièces d'angle métalliques est par exemple décrite dans le document WO2017064413 et est alignée le long de l'arête 1, chaque pièce métallique d'angle présentant deux ailes se développant chacune parallèlement à l'une des parois porteuse 2, 3 formant l'arête 1. Ces pièces d'angle sont soudées deux à deux le long de l'arête 1 pour assurer l'étanchéité de la membrane étanche au droit de l'arête 1. En outre, ces pièces d'angle métalliques et les membranes étanches des parois de cuve sont soudées sur les bandes d'ancrage transversales 45 de manière à relier de manière étanche lesdites membranes étanches des parois de cuve au droit de l'arête 1.

Ainsi, dans ce mode de réalisation, la bande d'ancrage transversales 45 et les pièces d'angle métalliques remplissent conjointement la même fonction qu'une cornière 9 telle que décrite ci-dessus en regard des figures 1 à 8.

Dans une variante non illustrée, les bandes d'ancrage transversales 45 sont d'une longueur prise parallèlement à l'arête 1 sensiblement égale à la longueur des éléments calorifuges de bordure 5. Chaque élément calorifuge de bordure 5 présente une unique rainure 32 sensiblement centrée sur ledit élément calorifuge de bordure 5. La bande d'ancrage transversale 45 est alors agencée pour chevaucher deux éléments calorifuges de bordure 5 adjacents de manière à ce que les pattes 33 des bandes d'ancrage transversales 45 soient logées dans une rainure 32 de l'un desdits éléments calorifuge de bordure 5 qu'elle chevauche.

La technique décrite ci-dessus pour réaliser une cuve présentant une seule membrane étanche peut être utilisée dans différents types de réservoirs, par exemple pour constituer une cuve à double membrane pour gaz naturel liquéfié (GNL) dans une installation terrestre ou dans un ouvrage flottant comme un navire méthanier ou autre. Dans ce contexte, on peut considérer que la membrane étanche illustrée sur les figures précédentes est une membrane étanche secondaire, et qu'une barrière isolante primaire ainsi qu'une membrane étanche primaire, non représentées, doivent encore être ajoutées sur cette membrane étanche secondaire. De cette manière, cette technique peut également être appliquée aux cuves présentant une pluralité de barrière thermiquement isolante et de membranes étanches superposées.

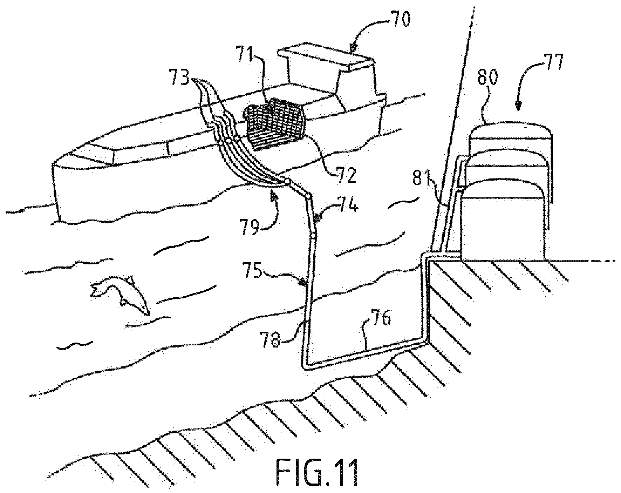

En référence à la figure 11, une vue écorchée d'un navire méthanier 70 montre une cuve étanche et isolée 71 de forme générale prismatique montée dans la double coque 72 du navire. La paroi de la cuve 71 comporte une barrière étanche primaire destinée à être en contact avec le GNL contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 11 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75.La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en oeuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention tel que défini par les revendications.

En particulier, une seule barrière thermiquement isolante et une seule membrane étanche sont illustrées et décrites ci-dessus, mais la cuve étanche et thermiquement isolante peut comporter deux barrières thermiquement isolantes et deux membranes étanches superposées par alternance. Ainsi la barrière thermiquement isolante et la membrane étanche décrites ci-dessus peuvent constituer une barrière thermiquement isolante secondaire et une membrane étanche secondaire d'une telle cuve, une barrière thermiquement isolante primaire reposant sur ladite membrane étanche secondaire et une membrane étanche primaire reposant sur la barrière thermiquement isolante primaire.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Cuve étanche et thermiquement isolante intégrée dans une structure porteuse polyédrique, la cuve comportant une pluralité de parois de cuve, les parois de cuve comportant une barrière thermiquement isolante ancrée sur la paroi porteuse correspondante et une membrane étanche portée par ladite barrière thermiquement isolante, une première paroi porteuse (2) de la structure porteuse et une deuxième paroi porteuse (3) de la structure porteuse formant une arête (1) de la structure porteuse,
la barrière thermiquement isolante d'une première paroi de cuve comportant une rangée de blocs de bordure (5) ancrés sur la première paroi porteuse (2) et juxtaposés le long de l'arête (1) de manière à former une surface de support parallèle à la première paroi porteuse (2),
la cuve comportant une rangée de bandes d'ancrage (45) se développant parallèlement à l'arête (1), lesdites bandes d'ancrage (45) étant portées par la première surface de support et ancrées à la deuxième paroi porteuse (3) par une rangée de tiges d'ancrage (12), une dite tige d'ancrage (12) comportant une première extrémité ancrée à la deuxième paroi porteuse (3) et une deuxième extrémité accouplée à la rangée de bandes d'ancrage (45) pour transmettre un effort de traction entre la rangée de bandes d'ancrage (45) et la deuxième paroi porteuse (3), une portion d'extrémité de la membrane étanche de la première paroi de cuve tournée vers l'arête (1) étant fixée de manière étanche sur ladite rangée de bandes d'ancrage, une bande d'ancrage (45) de la rangée de bande d'ancrage (45) comportant une première et une deuxième pattes faisant saillie respectivement depuis deux portions d'extrémité opposées de la bande d'ancrage (45) en direction de la première paroi porteuse (3),
cuve dans laquelle un premier et un deuxième desdits blocs de bordure (5) comportent chacun une rainure (32) ménagée dans l'épaisseur dudit bloc de bordure (5) depuis une face supérieure dudit bloc de bordure (5) de manière à former un espace accessible depuis la deuxième paroi porteuse (3) dans le bloc de bordure, et **caractérisée en ce que** une première et une deuxième desdites tiges d'ancrage (12) sont logées respectivement dans la rainure (32) du premier et du deuxième bloc de bordure (5), et **en ce que** ladite bande d'ancrage (45) de la rangée de bande d'ancrage (45) est portée à chevauchement sur le premier bloc de bordure (5) et le deuxième bloc de bordure (5), les première et une deuxième pattes de ladite bande d'ancrage (45) étant engagées respectivement dans la rainure (32) du premier bloc de bordure (5) et du deuxième bloc de bordure (5) et étant respectivement accouplées à la première tige d'ancrage (12) et à la deuxième tige d'ancrage (12).

2. Cuve étanche et thermiquement isolante selon la revendication 1, dans laquelle lesdits premiers et deuxième blocs de bordures (5) présentent une longueur égale prise selon une direction parallèle à l'arête (1), et dans laquelle la bandes d'ancrage (45) portée à chevauchement sur le premier bloc de bordure (5) et le deuxième bloc de bordure (5) présente une longueur prise selon la direction parallèle à l'arête (1) inférieure à ladite longueur des blocs de bordure (5).

3. Cuve étanche et thermiquement isolante selon la revendication 1 ou 2, dans laquelle la rainure (32) du premier bloc de bordure (5) constitue une première rainure (32), le premier bloc de bordure (5) comportant en outre une deuxième rainure (32) ménagée dans l'épaisseur dudit premier bloc de bordure (5) depuis la face supérieure dudit bloc de bordure (5) et espacée de la première rainure (32) le long de l'arête (1) de manière à former un deuxième espace accessible depuis la deuxième paroi porteuse (3), une troisième des tiges d'ancrage (12) étant logée dans la deuxième rainure (32) dudit bloc de bordure (5),
dans laquelle une bande d'ancrage (45) de la rangée de bande d'ancrage (45) est disposée seulement sur le premier bloc de bordure (5), ladite bande d'ancrage (45) comportant une première et une deuxième pattes faisant saillie respectivement depuis deux portions d'extrémité opposées de la bande d'ancrage (45) en direction de la première paroi porteuse (2), les première et une deuxième pattes étant engagées respectivement dans la première et la deuxième rainures (32) du premier bloc de bordure (5) et étant respectivement accouplées à la première tige d'ancrage (12) et à la troisième tige d'ancrage (12).

4. Cuve étanche et thermiquement isolante selon l'une des revendications 1 à 3, dans laquelle la barrière thermiquement isolante d'une deuxième paroi de cuve comporte une deuxième rangée de blocs de bordure (5) ancrés sur la deuxième paroi porteuse (3) et juxtaposés le long de l'arête (1) de manière à former une deuxième surface de support parallèle à la deuxième paroi porteuse (3),
la cuve comportant une deuxième rangée de bandes d'ancrage (45) se développant parallèlement à l'arête (1), lesdites bandes d'ancrage (45) étant portées par la deuxième surface de support et ancrées à la première paroi porteuse (2) par une deuxième rangée de tiges d'ancrage (12), une dite tige d'ancrage (12) comportant une première extrémité ancrée à la première paroi porteuse (2) et une deuxième extrémité accouplée à la deuxième rangée de bandes d'ancrage (45) pour transmettre un effort de traction entre la deuxième rangée de bandes d'ancrage (45) et la première paroi porteuse (2), une portion d'extrémité de la membrane étanche de la deuxième paroi de cuve tournée vers l'arête (1) étant fixée de manière étanche sur ladite deuxième rangée de bandes d'ancrage(45),
un premier et un deuxième desdits blocs de bordure (5) de la deuxième rangée comportant chacun une rainure (32) ménagée dans l'épaisseur dudit bloc de bordure (5) depuis une face supérieure dudit bloc de bordure (5) de manière à former un espace accessible depuis la première paroi porteuse (2) dans le bloc de bordure (5), une première et une deuxième desdites tiges d'ancrage (12) de la deuxième rangée étant logées respectivement dans la rainure (32) du premier et du deuxième bloc de bordure (5)de la deuxième rangée,
dans laquelle une bande d'ancrage (45) de la deuxième rangée de bande d'ancrage (45) est portée à chevauchement sur le premier bloc de bordure (5) et le deuxième bloc de bordure (5) de la deuxième rangée, ladite bande d'ancrage (45) comportant une première et une deuxième pattes faisant saillie respectivement depuis deux portions d'extrémité opposées de la bande d'ancrage (45) en direction de la deuxième paroi porteuse (3), les première et une deuxième pattes étant engagées respectivement dans la rainure (32) du premier bloc de bordure (5) et du deuxième bloc de bordure(5) de la deuxième rangée et étant respectivement accouplées à la première tige d'ancrage (12) et à la deuxième tige d'ancrage (12) de la deuxième rangée.

5. Cuve étanche et thermiquement isolante selon la revendication 4, dans laquelle les rainures (32) des premier et deuxième blocs de bordure (5) de la rangée de blocs de bordure (5) de la première paroi de cuve sont situées en face des rainures (32) des premier et deuxième blocs de bordure (5) de la deuxième rangée de blocs de bordures (5) au droit de l'arête (1), de sorte que la première tige d'ancrage (12) et la deuxième tige d'ancrage (12) ancrées à la première paroi porteuse (2) croisent respectivement la première tige d'ancrage (12) et la deuxième tige d'ancrage (12) ancrées à la deuxième paroi porteuse (3).

6. Cuve étanche et thermiquement isolante selon l'une des revendications 4 à 5, comportant en outre des pièces d'angle disposées sur les blocs de bordures (5) de la première paroi de cuve et de la deuxième paroi de cuve, les pièces d'angle comportant deux portions planes situées dans les plans de la membrane étanche des première et deuxième parois de cuve, lesdites portions plane desdites pièces d'angle étant fixées de manière étanche à au moins une bande d'ancrage(45) des rangées de bandes d'ancrage(45) de manière à relier de manière étanche la membrane étanche de la première paroi de cuve et la membrane étanche de la deuxième paroi de cuve.

7. Cuve étanche et thermiquement isolante selon l'une des revendications 4 à 6, dans laquelle la structure porteuse comporte une troisième paroi porteuse sur laquelle est ancrée la barrière thermiquement isolante d'une troisième paroi de cuve, ladite troisième paroi de cuve comportant une membrane étanche reposant sur la barrière thermiquement isolante de ladite troisième paroi de cuve, la troisième paroi porteuse formant avec la première paroi porteuse et la deuxième paroi porteuse un coin de la structure porteuse situé à une extrémité de ladite arête,
La barrière thermiquement isolante de chacune des première, deuxième et troisième parois de cuve comportant un bloc isolant de coin (38) respectif, lesdits blocs isolants de coin (38) étant jointifs au droit du coin de la structure porteuse
la cuve comportant une pièce de coin (39) étanche comportant une première aile (40) reposant sur la barrière thermiquement isolante de la première paroi de cuve, une deuxième aile (40) reposant sur la barrière thermiquement isolante de la deuxième paroi de cuve et une troisième aile (40) reposant sur la barrière thermiquement isolante de la troisième paroi de cuve,
le bloc isolant de coin (38) de la première paroi de cuve comportant une rainure (41) ménagée dans l'épaisseur dudit bloc isolant de coin (38) de la première paroi de cuve depuis une face supérieure dudit bloc isolant de coin (38) de la première paroi de cuve de manière à former un espace accessible depuis la deuxième paroi (3) porteuse dans ledit bloc isolant de coin (38),
le bloc isolant de coin (38) de la deuxième paroi de cuve comportant une rainure (41) ménagée dans l'épaisseur dudit bloc isolant de coin (38) de la deuxième paroi de cuve depuis une face supérieure dudit bloc isolant de coin (38) de la deuxième paroi de cuve de manière à former un espace accessible depuis la première paroi (2) porteuse dans ledit bloc isolant de coin (38),
une dernière bande d'ancrage (45) située à l'extrémité de la rangée de bandes d'ancrage (45) de la première paroi de cuve étant disposée à chevauchement sur un bloc de bordure (5) et le bloc isolant de coin (38) de la première paroi de cuve, ladite bande d'ancrage (45) d'extrémité comportant une patte faisant saillie dans la rainure (41) dudit bloc isolant de coin (38) de la première paroi de cuve et étant accouplée à une dernière tige d'ancrage (12) située à l'extrémité de la rangée de tiges d'ancrage (12) pour transmettre un effort de traction entre ladite bande d'ancrage (45) et la deuxième paroi porteuse (3),
une dernière bande d'ancrage (45) située à l'extrémité de la deuxième rangée de bandes d'ancrage (45) de la deuxième paroi de cuve étant disposée à chevauchement sur un bloc de bordure (5) et le bloc isolant de coin (38) de la deuxième paroi de cuve, ladite bande d'ancrage (45) d'extrémité comportant une patte faisant saillie dans la rainure (41) dudit bloc isolant de coin (38) de la première paroi de cuve et étant accouplée à une dernière tige d'ancrage (12) située à l'extrémité de la rangée de tiges d'ancrage (12) pour transmettre un effort de traction entre ladite bande d'ancrage (45) et la première paroi porteuse (2).

8. Cuve étanche et thermiquement isolante selon la revendication 7, comportant en outre une tige d'ancrage de coin (99) présentant une première extrémité ancrée sur la structure porteuse au niveau du coin de la structure porteuse et une deuxième extrémité attachée à une surface extérieure de la pièce de coin (39) pour transmettre un effort de traction entre la pièce de coin (39) et la structure porteuse et retenir la pièce de coin (39) sur les barrières thermiquement isolantes des première, deuxième et troisième paroi de cuve, ladite tige d'ancrage de coin (99) s'étendant selon une direction centrale de l'angle solide formé par le coin de la structure porteuse et étant attachée à une zone centrale de la pièce de coin située à la jonction entre les première, deuxième et troisième ailes de la pièce de coin.

9. Cuve étanche et thermiquement isolante selon la revendication 8, dans laquelle la pièce de coin (39) comporte une embase (47) cylindrique creuse ouverte au niveau de la zone centrale de la pièce de coin, ladite embase (47) présentant un fond (48) percé, la deuxième extrémité de la tige d'ancrage de coin (99) traversant le fond (48) percé et étant logée dans ladite embase (47) de manière à retenir ladite embase ladite embase (47) sur la structure porteuse, une plaque métallique de coin (50) étant fixée de manière étanche sur la pièce de coin (39) de manière à obstruer de manière étanche l'ouverture de l'embase (47).

10. Cuve étanche et thermiquement isolante selon l'une des revendications 1 à 9, dans laquelle au moins un des blocs de bordure comporte :
un panneau de fond (13) globalement rectangulaire,
un panneau de couvercle (14) globalement rectangulaire disposé parallèlement au panneau de fond (13) à l'aplomb du panneau de fond (13),
des éléments d'entretoise (16), disposés entre le panneau de fond (13) et le panneau de couvercle (14) et s'étendant dans une direction d'épaisseur du bloc de bordure (5) entre le panneau de fond (13) et le panneau de couvercle (14) de manière à maintenir le panneau de couvercle (14) à distance du panneau de fond (13),
une garniture calorifuge (15) disposée entre le panneau de fond (13) et le panneau de couvercle (14) et entre les éléments d'entretoise (16), de manière à remplir un espace interne du bloc de bordure (5),
dans lequel le panneau de couvercle (14) présente au moins une découpe (29) débouchant sur un bord transversal du panneau de couvercle (14) à une position située entre deux bords longitudinaux du panneau de couvercle (14), un côté transversal du bloc de bordure (5) comportant au moins une ouverture (21) située au droit de ladite au moins une découpe (29),
les éléments d'entretoise (16) et la garniture calorifuge (15) étant disposés de manière à ménager un espace libre sous ladite au moins une découpe (29) du panneau de couvercle(14) et au droit de ladite au moins une ouverture (21) du côté transversal du bloc de bordure (5), ledit espace libre formant la rainure (32) ménagée dans l'épaisseur dudit bloc de bordure (5).

11. Cuve étanche et thermiquement isolante selon l'une des revendications 1 à 10, dans laquelle les blocs de bordure (5) présentent une longueur selon une direction parallèle à l'arête (1) uniforme et les bandes d'ancrage (45) présentent une longueur uniforme selon cette direction, la longueur des bandes d'ancrage (45) selon cette direction étant une fraction entière ou un multiple entier de la longueur des blocs de bordure (5) selon cette direction.

12. Navire (70) pour le transport d'un produit liquide froid, le navire comportant une double coque (72) et une cuve (71) selon l'une des revendications1 à 11 disposée dans la double coque.

13. Système de transfert pour un produit liquide froid, le système comportant un navire (70) selon la revendication 12, des canalisations isolées (73, 79, 76, 81) agencées de manière à relier la cuve (71) installée dans la coque du navire à une installation de stockage flottante ou terrestre (77) et une pompe pour entraîner un flux de produit liquide froid à travers les canalisations isolées depuis ou vers l'installation de stockage flottante ou terrestre vers ou depuis la cuve du navire.

14. Procédé de chargement ou déchargement d'un navire (70) selon la revendication 12, dans lequel on achemine un produit liquide froid à travers des canalisations isolées (73, 79, 76, 81) depuis ou vers une installation de stockage flottante ou terrestre (77) vers ou depuis la cuve du navire (71).

## Patentansprüche

1. Ein in eine polyedrische Haltestruktur integriertes dichtes und wärmeisolierendes Gefäß, wobei das Gefäß eine Vielzahl von Gefäßwänden umfasst, wobei die Gefäßwände eine wärmeisolierende Sperre , welche auf der entsprechenden Haltestruktur verankert ist, und eine dichte Membran, welche von der wärmeisolierenden Sperre getragen ist, umfasst, wobei eine erste Trägerwand (2) der Haltestruktur und eine zweite Trägerwand (3) der Haltestruktur eine Kante (1) der Haltestruktur bilden,
wobei die wärmeisolierende Sperre einer ersten Gefäßwand eine Reihe von Randblöcken (5) umfasst, welche auf der ersten Trägerwand (2) verankert sind und entlang der Kante nebeneinanderliegen, so dass sie eine Trägerfläche parallel zur ersten Trägerwand (2) bilden, wobei das Gefäß eine Reihe von Verankerungsstreifen (45), welche sich parallel zur Kante (1) erstrecken, umfasst, wobei die Verankerungsstreifen (45) von der ersten Trägerfläche getragen sind und mit der zweiten Trägerwand (3) mittels einer Reihe von Verankerungsstiften (12) verankert sind, wobei ein Verankerungsstift (12) ein erstes mit der zweiten Trägerwand (3) verankertes Ende und ein zweites mit der Reihe der Verankerungsstreifen (45) gekoppeltes Ende umfasst, um eine Zugkraft zwischen der Reihe der Verankerungsstreifen (45) und der zweiten Trägerwand (3) zu übertragen, wobei ein der Kante (1) zugewandter Endabschnitt der dichten Membran der ersten Gefäßwand in dichter Weise auf der Reihe der Verankerungsstreifen befestigt ist, wobei ein Verankerungstreifen (45) der Reihe der Verankerungstreifen (45) eine erste und zweite Lasche, welche jeweils von zwei gegenüberliegenden Endabschnitten des Verankerungsstreifens (45) in Richtung der ersten Trägerwand (3) hervorstehen,
Gefäß in dem ein erster und ein zweiter der Randblöcke (5) jeweils eine Vertiefung (32) umfasst, welche in die Dicke des ersten Randblocks (5) von der Oberseite des Randblocks (5) aus ausgebildet ist, um einen von der zweiten Trägerwand (5) aus zugänglichen Bereich in dem Randblock zu bilden, **dadurch gekennzeichnet, dass**
ein erster und ein zweiter Verankerungsstift (12) jeweils in der Vertiefung (32) des ersten und des zweiten Randblocks aufgenommen sind und dass der Verankerungstreifen (45) der Reihe der Verankerungsstreifen (45) auf dem ersten Randblock (5) und dem zweiten Randblock (5) überlappend getragen ist, wobei die ersten und zweiten Laschen des Verankerungsstreifens (45) jeweils in der Vertiefung (32) des ersten Randblocks (5) und des zweiten Randblocks (5) eingreifen und jeweils mit dem ersten Verankerungsstift (12) und dem zweiten Verankerungsstift (12) gekoppelt sind.

2. Dichtes und wärmeisolierende Gefäß gemäß Anspruch 1, wobei die ersten und die zweiten Randblöcke (5) eine gleiche Länge in einer Richtung parallel zur Kante (1) aufweisen, und wobei die Verankerungsstreifen (45), welche überlappend auf dem ersten Randblock (5) und dem zweiten Randblock (5) getragen sind, eine gleiche Länge in einer Richtung parallel zur Kante (1) aufweisen, welche kleiner als die Länge der Randblöcke (5) ist.

3. Dichtes und wärmeisolierendes Gefäß gemäß Anspruch 1 oder 2, wobei die Vertiefung (32) des ersten Randblocks (5) eine erste Vertiefung (32) bildet, wobei der erste Randblock (5) weiterhin eine zweite Vertiefung (32) umfasst, welche von der Oberseite des Randblocks (5) aus in die Dicke des ersten Randblocks (5) eingearbeitet ist und entlang der Kante (1) von der ersten Vertiefung (32) beabstandet ist, um einen zweiten Bereich zu bilden, der von der zweiten Trägerwand (3) aus zugänglich ist, wobei ein dritter der Verankerungsstift (12) in der zweiten Vertiefung (32) des Randblocks (5) untergebracht ist,
wobei ein Verankerungsstreifen (45) der Reihe von Verankerungsstreifen (45) nur auf dem ersten Randblock (5) angeordnet ist, wobei der Verankerungsstreifen (45) eine erste und eine zweiten Lasche aufweist, die jeweils von zwei gegenüberliegenden Endabschnitten des Verankerungsstreifens (45) in Richtung der ersten Trägerwand (2) hervorstehen, wobei die ersten und eine zweite Lasche jeweils in die erste und zweite Vertiefung (32) des ersten Randblocks (5) eingreifen und jeweils mit dem ersten Verankerungsstift (12) und dem dritten Verankerungsstift (12) gekoppelt sind.

4. Dichtes und wärmeisolierendes Gefäß gemäß einem der Ansprüche 1 bis 3, wobei die wärmeisolierende Sperre einer zweiten Gefäßwand eine zweite Reihe von Randblöcken (5) umfasst, die an der zweiten Trägerwand (3) verankert und entlang der Kante (1) nebeneinander angeordnet sind, so dass sie eine zweite Trägerfläche parallel zur Trägerwand (3) bilden,
wobei das Gefäß eine zweite Reihe von Verankerungsstreifen (45) aufweist, die sich parallel zur Kante (1) erstrecken, wobei die Verankerungsstreifen (45) von der zweiten Trägerfläche getragen sind und durch eine zweite Reihe von Verankerungsstiften (12) an der ersten Trägerwand (2) verankert sind, wobei ein Verankerungsstift (12) ein erstes Ende aufweist, das an der ersten Trägerwand (2) verankert ist, und ein zweites Ende, das mit der zweiten Reihe von Verankerungsstreifen (45) gekoppelt ist, um eine Zugkraft zwischen der zweiten Reihe von Verankerungsstreifen (45) und der ersten Trägerwand (2) zu übertragen, wobei ein der Kante (1) zugewandter Endabschnitt der dichten Membran der zweiten Gefäßwand in dichter Weise auf der zweiten Reihe der Verankerungsstreifen (45) befestigt ist,
wobei ein erster und ein zweiter der Randblöcke (5) der zweiten Reihe jeweils eine Vertiefung (32) aufweisen, welche in die Dicke des Randblocks (5) von einer Oberseite des Randblocks (5) aus ausgebildet ist, um einen von der ersten Trägerwand (2) aus zugänglichen Bereich in dem Randblock (5) zu bilden, wobei ein erster und ein zweiter der Verankerungsstiften (12) der zweiten Reihe jeweils in der Vertiefung (32) des ersten und des zweiten Randblocks (5) der zweiten Reihe aufgenommen sind,
wobei ein Verankerungsstreifen (45) der zweiten Reihe von Verankerungsstreifen (45) überlappend auf dem ersten Randblock (5) und dem zweiten Randblock (5) der zweiten Reihe getragen ist, wobei der Verankerungsstreifen (45) eine erste und eine zweite Lasche aufweist, die jeweils von zwei gegenüberliegenden Endabschnitten des Verankerungsstreifens (45) in Richtung der zweiten Trägerwand (3) vorstehen, wobei die ersten und eine zweite Lasche jeweils in die Vertiefung (32) des ersten Randblocks (5) und des zweiten Randblocks (5) der zweiten Reihe eingreifen und jeweils mit dem ersten Verankerungsstift (12) und dem zweiten Verankerungsstift (12) der zweiten Reihe gekoppelt sind.

5. Dichter und wärmeisolierender Tank gemäß Anspruch 4, wobei die Vertiefungen (32) des ersten und zweiten Randblocks (5) der Reihe von Randblöcken (5) der ersten Gefäßwand gegenüber den Vertiefungen (32) des ersten und zweiten Randblocks (5) der zweiten Reihe von Randblöcken (5) an der Kante (1) angeordnet sind, so dass der erste Verankerungsstifte (12) und der zweite Verankerungsstift (12), die an der ersten Trägerwand (2) verankert sind, jeweils den ersten Verankerungsstift (12) und den zweiten Verankerungsstift (12), die an der zweiten Trägerwand (3) verankert sind, kreuzen.

6. Dichtes und wärmeisolierendes Gefäß gemäß Anspruch 4 bis 5, umfassend weiterhin Winkelstücke, welche an den Randblöcken (5) der ersten Gefäßwand und der zweiten Gefäßwand angeordnet sind, wobei die Winkelstücke zwei plane Abschnitte aufweisen, die in dem Bereich der dichten Membran der ersten und der zweiten Gefäßwand liegen, wobei die planen Abschnitte der Winkelstücke dicht an mindestens einem Verankerungsstreifen (45) der Reihen von Verankerungsstreifen (45) befestigt sind, um die dichte Membran der ersten Gefäßwand und die dichte Membran der zweiten Gefäßwand dicht zu verbinden.

7. Dichtes und wärmeisolierendes Gefäß gemäß einem der Ansprüche 4 bis 6, wobei die Haltestruktur eine dritte Trägerwand aufweist, an der die wärmeisolierende Sperre einer dritten Gefäßwand verankert ist, wobei die dritte Gefäßwand eine dichte Membran aufweist, die auf der wärmeisolierenden Sperre der dritten Gefäßwand aufliegt, wobei die dritte Trägerwand mit der ersten Trägerwand und der zweiten Trägerwand eine Ecke der Haltestruktur bildet, die an einem Ende der Kante angeordnet ist,
die wärmeisolierende Sperre jeder der ersten, zweiten und dritten Gefäßwände umfasst einen jeweiligen Eckisolierblock (38), wobei die Eckisolierblöcke (38) an der Ecke der Haltestruktur aneinanderstoßen
das Gefäß ein abgedichtetes Eckstück (39) umfasst, das einen ersten Flügel (40), der auf der wärmeisolierenden Sperre der ersten Gefäßwand ruht, einen zweiten Flügel (40), der auf der wärmeisolierenden Sperre der zweiten Gefäßwand ruht, und einen dritten Flügel (40), der auf der wärmeisolierenden Sperre der dritten Gefäßwand ruht, umfasst,
der Eckisolierblock (38) der ersten Gefäßwand eine Vertiefung (41) umfasst, die in der Dicke des Eckisolierblocks (38) der ersten Gefäßwand von einer oberen Fläche des Eckisolierblocks (38) der ersten Gefäßwand aus ausgebildet ist, um einen von der ersten Trägerwand (2) aus zugänglichen Bereich in dem Eckisolierblock (38) zu bilden,
der Eckisolierblock (38) der zweiten Gefäßwand eine Vertiefung (41) umfasst, die in der Dicke des Eckisolierblocks (38) der zweiten Gefäßwand von einer Oberseite des Eckisolierblocks (38) der zweiten Gefäßwand aus ausgebildet ist, um einen von der ersten Trägerwand (2) aus zugänglichen Bereich in dem Eckisolierblock (38) zu bilden,
ein letzter Verankerungsstreifen (45), der sich am Ende der Reihe von Verankerungsstreifen (45) der ersten Gefäßwand befindet, überlappend auf einem Randblock (5) und dem Eckisolierblock (38) der ersten Gefäßwand angeordnet ist, wobei der Verankerungsstreifen (45) eine Lasche umfasst, die in die Vertiefung (41) des Eckisolierblocks (38) der ersten Gefäßwand hervorsteht und mit einem letzten Verankerungsstift (12) gekoppelt ist, welcher am Ende der Reihe der Verankerungsstifte (12) angeordnet ist, um eine Zugkraft zwischen dem Verankerungsstreifen (45) und der zweiten tragenden Wand (3) zu übertragen,
ein letzter Verankerungsstreifen (45), der sich am Ende der zweiten Reihe Verankerungsstreifen (45) der zweiten Gefäßwand befindet, überlappend auf einem Randblock (5) und dem Eckisolierblock (38) der zweiten Gefäßwand angeordnet ist, wobei der Verankerungsstreifen (45) eine Lasche umfasst, die in die Vertiefung (41) des Eckisolierblocks (38) der ersten Gefäßwand hervorsteht und mit einem letzten Verankerungsstift (12) gekoppelt ist, welcher am Ende der Reihe der Verankerungsstift (12) angeordnet ist, um eine Zugkraft zwischen dem Verankerungsstreifen (45) und der ersten tragenden Wand (2) zu übertragen.

8. Dichtes und wärmeisolierendes Gefäß gemäß Anspruch 7, weiterhin umfassend eine Eckankerstange (99) mit einem ersten Ende, welches an der Haltestruktur an der Ecke der Haltestruktur verankert ist, und einem zweiten Ende, das an einer Außenfläche des Eckstücks (39) befestigt ist, um eine Zugkraft zwischen dem Eckstück (39) und der Haltestruktur zu übertragen und das Eckstück (39) auf den wärmeisolierenden Sperren der ersten, zweiten und dritten Gefäßwand zu halten, wobei sich die Eckankerstange (99) in einer zentralen Richtung des von der Ecke der Haltestruktur gebildeten Raumwinkels erstreckt und an einem zentralen Bereich des Eckstücks befestigt ist, welcher an der Verbindungsstelle zwischen dem ersten, zweiten und dritten Flügel des Eckstücks angeordnet ist.

9. Dichtes und wärmeisolierendes Gefäß gemäß Anspruch 8, wobei das Eckstück (39) einen hohlen zylindrischen Sockel (47) aufweist, der an dem zentralen Bereich des Eckstücks offen ist, wobei der Sockel (47) einen durchbohrten Boden (48) aufweist, wobei das zweite Ende der Eckankerstange (99) durch den durchbohrten Boden (48) hindurchgeht und in dem Sockel (47) aufgenommen ist, um den Sockel den Sockel (47) an der Haltestruktur zu halten, wobei eine metallische Eckplatte (50) in dichter Weise an dem Eckstück (39) befestigt ist, um die Öffnung des Sockels (47) dicht zu verschließen.

10. Dichtes und wärmeisolierendes Gefäß gemäß einem der Ansprüche 1 bis 9, wobei mindestens einer der Randblöcke umfasst:
eine im Wesentlichen rechteckige Bodenplatte (13),
eine im Wesentlichen rechteckige Deckelplatte (14), die parallel zur Bodenplatte (13) im Lot auf die Bodenplatte (13) angeordnet ist,
Distanzelemente (16), die zwischen der Bodenplatte (13) und der Deckelplatte (14) angeordnet sind und sich in einer Dickenrichtung des Randblocks (5) zwischen der Bodenplatte (13) und der Deckelplatte (14) erstrecken, so dass die Deckelplatte (14) von der Bodenplatte (13) beabstandet gehalten wird,
eine wärmeisolierende Einlage (15), die zwischen der Bodenplatte (13) und der Deckelplatte (14) und zwischen den Distanzelementen (16) angeordnet ist, um einen Innenraum des Randblocks (5) auszufüllen,
wobei die Deckelplatte (14) mindestens einen Ausschnitt (29) umfasst, der an einer Querkante der Deckelplatte (14) an einer Position zwischen zwei Längskanten der Deckelplatte (14) mündet, wobei eine Querseite des Randblocks (5) mindestens eine Öffnung (21) umfasst, welche an dem mindestens einen Ausschnitt (29) angeordnet ist,
wobei die Distanzelemente (16) und die wärmeisolierende Einlage (15) so angeordnet sind, dass sie einen Freiraum unter dem mindestens einen Ausschnitt (29) der Deckelplatte (14) und an der mindestens einen Öffnung (21) an der Querseite des Randblocks (5) bilden, wobei der Freiraum die Vertiefung (32) bildet, die in die Dicke des Randblocks (5) eingearbeitet ist.

11. Dichtes und wärmeisolierendes Gefäß gemäß einem der Ansprüche 1 bis 10, wobei die Randblöcke (5) eine in paralleler Richtung zur Kante (1) einheitliche Länge aufweisen und die Verankerungsstreifen (45) eine einheitliche Länge in dieser Richtung aufweisen, wobei die Länge der Verankerungsstreifen (45) in dieser Richtung ein ganzzahliger Bruchteil oder ein ganzzahliges Vielfaches der Länge der Randblöcke (5) in dieser Richtung ist.

12. Schiff (70) zum Transport einer kalten Flüssigkeit, wobei das Schiff eine Hülle (72) und ein in der Hülle angeordnetes Gefäß (71) gemäß einem der Ansprüche 1 bis 11 umfasst.

13. Transfersystem für eine kalte Flüssigkeit, wobei das System ein Schiff (70) gemäß Anspruch 12, isolierte Rohrleitungen (73, 79, 76, 81), welche so angeordnet sind, dass sie das in der Hülle des Schiffes angeordnete Gefäß (71) mit einer schwimmenden oder erdverbundenen Speicheranlage (1077) verbinden, und eine Pumpe umfasst, um eine kalte Flüssigkeit durch isolierte Rohrleitungen von oder zu der schwimmenden oder erdverbundenen Speicheranlage zu oder von dem Gefäß des Schiffes zuleiten.

14. Verfahren zur Be- oder Entladung eines Schiffes (70) gemäß Anspruch 132, wobei eine kalte Flüssigkeit von oder zu einer schwimmenden oder erdverbundenen Speicheranlage (77) zu oder von dem Gefäß des Schiffes durch isolierte Rohrleitungen (73, 79, 76, 81) geleitet wird.

## Claims

1. Sealed and thermally insulating tank incorporated into a polyhedral bearing structure, the tank comprising a plurality of tank walls, the tank walls comprising a thermally insulating barrier anchored on the corresponding bearing wall and a sealed membrane borne by said thermally insulating barrier, a first bearing wall (2) of the bearing structure and a second bearing wall (3) of the bearing structure forming an edge corner (1) of the bearing structure,
the thermally insulating barrier of a first tank wall comprising a row of edging blocks (5) anchored on the first bearing wall (2) and juxtaposed along the edge corner (1) in such a way as to form a support surface parallel to the first bearing wall (2),
the tank comprising a row of anchor strips (45) extending parallel to the edge corner (1), said anchor strips (45) being borne by the first support surface and anchored to the second bearing wall (3) by a row of anchor rods (12), one said anchor rod (12) comprising a first end anchored to the second bearing wall (3) and a second end coupled to the row of anchor strips (45) in order to transmit a tensile load between the row of anchor strips (45) and the second bearing wall (3), one end portion of the sealed membrane of the first tank wall turned towards the edge corner (1) being fixed in a sealed manner on said row of anchor strips, an anchor strip (45) of the row of anchor strip (45) comprising a first tab and a second tab projecting respectively from two opposite end portions of the anchor strip (45) in the direction of the first bearing wall (3),
tank in which a first and a second of said edging blocks (5) each comprising a groove (32) formed in the thickness of said edging block (5) from an upper face of said edging block (5) in such a way as to form a space accessible from the second bearing wall (3) in the edging block, and **characterized in that** a first and a second of said anchor rods (12) are housed respectively in the groove (32) of the first and second edging blocks (5),
in which the anchor strip (45) in the row of anchor strips (45) is supported overlapping the first edging block (5) and the second edging block (5), the first and second tabs of said anchor strips (45) being engaged respectively in the groove (32) of the first edging block (5) and of the second edging block (5) and being respectively coupled to the first anchor rod (12) and to the second anchor rod (12).

2. Sealed and thermally insulating tank according to claim 1, in which said first and second edging blocks (5) have an equal length taken in a direction parallel to the edge corner (1), and in which the anchor strip (45) supported overlapping the first edging block (5) and the second edging block (5) has a length taken in the direction parallel to the edge corner (1) which is less than said length of the edging blocks (5).

3. Sealed and thermally insulating tank according to claim 1 or 2, in which the groove (32) of the first edging block (5) constitutes a first groove (32), the first edging block (5) further comprising a second groove (32) formed in the thickness of said first edging block (5) from the upper face of said edging block (5) and spaced from the first groove (32) along the edge corner (1) in such a way as to form a second space accessible from the second bearing wall (3), a third of the anchor rods (12) being housed in the second groove (32) of said edging block (5),
in which an anchor strip (45) in the row of anchor strips (45) is disposed only on the first edging block (5), said anchor strip (45) comprising a first tab and a second tab projecting respectively from two opposite end portions of the anchor strip (45) in the direction of the first bearing wall (2), the first and second tabs being engaged respectively in the first and second grooves (32) of the first edging block (5) and being respectively coupled to the first anchor rod (12) and to the third anchor rod (12).

4. Sealed and thermally insulating tank according to one of claims 1 to 3, in which the thermally insulating barrier of a second tank wall comprises a second row of edging blocks (5) anchored on the second bearing wall (3) and juxtaposed along the edge corner (1) in such a way as to form a second support surface parallel to the second bearing wall (3),
the tank comprising a second row of anchor strips (45) extending parallel to the edge corner (1), said anchor strips (45) being borne by the second support surface and anchored to the first bearing wall (2) by a second row of anchor rods (12), a said anchor rod (12) comprising a first end anchored to the first bearing wall (2) and a second end coupled to the second row of anchor strips (45) in order to transmit a tensile load between the second row of anchor strips (45) and the first bearing wall (2), an end portion of the sealed membrane of the second tank wall turned towards the edge corner (1) being fixed in a sealed manner on said second row of anchor strips (45),
a first and a second of said edging blocks (5) in the second row each comprising a groove (32) formed in the thickness of said edging block (5) from an upper face of said edging block (5) in such a way as to form a space accessible from the first bearing wall (2) in the edging block (5), a first and a second of said anchor rods (12) in the second row being housed respectively in the groove (32) of the first and second edging blocks (5) in the second row,
in which an anchor strip (45) in the second row of anchor strips (45) is supported overlapping the first edging block (5) and the second edging block (5) in the second row, said anchor strip (45) comprising a first tab and a second tab projecting respectively from two opposite end portions of the anchor strip (45) in the direction of the second bearing wall (3), the first and second tabs being engaged respectively in the groove (32) of the first edging block (5) and of the second edging block (5) in the second row and being respectively coupled to the first anchor rod (12) and to the second anchor rod (12) in the second row.

5. Sealed and thermally insulating tank according to claim 4, in which the grooves (32) of the first and second edging blocks (5) in the row of edging blocks (5) of the first tank wall are located facing the grooves (32) of the first and second edging blocks (5) in the second row of edging blocks (5) in line with the edge corner (1), in such a way that the first anchor rod (12) and the second anchor rod (12) anchored to the first bearing wall (2) respectively intersect the first anchor rod (12) and the second anchor rod (12) anchored to the second bearing wall (3).

6. Sealed and thermally insulating tank according to claim 4 or 5, further comprising angle pieces disposed on the edging blocks (5) of the first tank wall and of the second tank wall, the angle pieces comprising two planar portions located in the planes of the sealed membrane of the first and second tank walls, said planar portions of said angle pieces being fixed in a sealed manner to at least one anchor strip (45) in the rows of anchor strips (45) in such a way as to connect in a sealed manner the sealed membrane of the first tank wall and the sealed membrane of the second tank wall.

7. Sealed and thermally insulating tank according to one of claims 4 to 6, in which the bearing structure comprises a third bearing wall on which the thermally insulating barrier of a third tank wall is anchored, said third tank wall comprising a sealed membrane lying on the thermally insulating barrier of said third tank wall, the third bearing wall forming with the first bearing wall and the second bearing wall a corner of the bearing structure located at one end of said edge corner,
the thermally insulating barrier of each of the first, second and third tank walls comprising a respective corner insulating block (38), said corner insulating blocks (38) being joined in line with the corner of the bearing structure
the tank comprising a sealed corner piece (39) comprising a first flange (40) lying on the thermally insulating barrier of the first tank wall, a second flange (40) lying on the thermally insulating barrier of the second tank wall and a third flange (40) lying on the thermally insulating barrier of the third tank wall,
the corner insulating block (38) of the first tank wall comprising a groove (41) formed in the thickness of said corner insulating block (38) of the first tank wall from an upper face of said corner insulating block (38) of the first tank wall in such a way as to form a space accessible from the second bearing wall (3) in said corner insulating block (38),
the corner insulating block (38) of the second tank wall comprising a groove (41) formed in the thickness of said corner insulating block (38) of the second tank wall from an upper face of said corner insulating block (38) of the second tank wall in such a way as to form a space accessible from the first bearing wall (2) in said corner insulating block (38),
a last anchor strip (45) located at the end of the row of anchor strips (45) of the first tank wall being disposed overlapping an edging block (5) and the corner insulating block (38) of the first tank wall, said end anchor strip (45) comprising a tab projecting into the groove (41) of said corner insulating block (38) of the first tank wall and being coupled to a last anchor rod (12) located at the end of the row of anchor rods (12) in order to transmit a tensile load between said anchor strip (45) and the second bearing wall (3),
a last anchor strip (45) located at the end of the second row of anchor strips (45) of the second tank wall being disposed overlapping an edging block (5) and the corner insulating block (38) of the second tank wall, said end anchor strip (45) comprising a tab projecting into the groove (41) of said corner insulating block (38) of the first tank wall and being coupled to a last anchor rod (12) located at the end of the row of anchor rods (12) in order to transmit a tensile load between said anchor strip (45) and the first bearing wall (2).

8. Sealed and thermally insulating tank according to claim 7, further comprising a corner anchor strip (99) having a first end anchored on the bearing structure in the corner of the bearing structure and a second end attached to an external surface of the corner piece (39) in order to transmit a tensile load between the corner piece (39) and the bearing structure and retain the corner piece (39) on the thermally insulating barriers of the first, second and third tank walls, said corner anchor strip (99) extending in a central direction of the solid angle formed by the corner of the bearing structure and being attached to a central zone of the corner piece located at the point of connection between the first, second and third flanges of the corner piece.

9. Sealed and thermally insulating tank according to claim 8, in which the corner piece (39) comprises a hollow cylindrical base (47) which is open in the central zone of the corner piece, said base (47) having a perforated bottom (48) the second end of the corner anchor rod (99) passing through the perforated bottom (48) and being housed in said base (47) in such a way as to retain said base (47) on the bearing structure, a metal corner plate (50) being fixed in a sealed manner on the corner piece (39) in such a way as to block in a sealed manner the opening of the base (47).

10. Sealed and thermally insulating tank according to one of claims 1 to 9, in which at least one of the edging blocks comprises:
a bottom panel (13) which is rectangular overall,
a cover panel (14) which is rectangular overall disposed parallel to the bottom panel (13) plumb with the bottom panel (13),
spacer elements (16), disposed between the bottom panel (13) and the cover panel (14) and extending in a thickness direction of the edging block (5) between the bottom panel (13) and the cover panel (14) in such a way as to keep the cover panel (14) at a distance from the bottom panel (13),
an insulating filling (15) disposed between the bottom panel (13) and the cover panel (14) and between the spacer elements (16), in such a way as to fill an internal space of the edging block (5),
in which the cover panel (14) has at least one cut-out (29) opening on a transverse edge of the cover panel (14) at a position located between two longitudinal edges of the cover panel (14), a transverse side of the edging block (5) comprising at least one opening (21) located in line with said at least one cut-out (29),
the spacer elements (16) and the insulating filling (15) being disposed in such a way as to form a free space under said at least one cut-out (29) of the cover panel (14) and in line with said at least one opening (21) on the transverse side of the edging block (5), said free space forming the groove (32) formed in the thickness of said edging block (5).

11. Sealed and thermally insulating tank according to one of claims 1 to 10, in which the edging blocks (5) have a uniform length in a direction parallel to the edge corner (1) and the anchor strips (45) have a uniform length in this direction, the length of the anchor strips (45) in this direction being a whole fraction or an integer multiple of the length of the edging blocks (5) in this direction.

12. Ship (70) for transporting a cold liquid product, the ship comprising a double hull (72) and a tank (71) according to one of claims 1 to 11 disposed in the double hull.

13. System for transferring a cold liquid product, the system comprising a ship (70) according to claim 12, insulated pipelines (73, 79, 76, 81) arranged in such a way as to connect the tank (71) installed in the hull of the ship to a floating or onshore storage facility (77) and a pump for causing a cold liquid product to flow through the insulated pipelines from or to the floating or onshore storage facility to or from the tank of the ship.

14. Method for loading or offloading a ship (70) according to claim 12, in which a cold liquid product is conveyed through insulated pipelines (73, 79, 76, 81) from or to a floating or onshore storage facility (77) to or from the tank (71) of the ship.
